# EUROPEAN PATENT APPLICATION

(11) **EP 4 748 216 A1**
(43) Date of publication of application: **27.05.2026**
(21) Application number: 25214902.6
(22) Date of filing: 11.11.2025
(51) Int. Cl.: A01B 69/00, A01B 69/04, G06V 20/10

(54) **LANE ENTRY AND EXIT PREDICTION FOR AUTONOMOUS WORK VEHICLE NAVIGATION**

(30) Priority: 11.11.2024 US 202463718913 P; 11.11.2024 US 202463718909 P; 11.11.2024 US 202463718900 P; 11.11.2024 US 202463718891 P; 29.10.2025 US 202519372701
(71) Applicant: Deere & Company, Moline, IL 61265 (US)
(72) Inventor: HUBER-FEELY, Noah L., Lincoln, MA (US)
(74) Representative: Reddie & Grose LLP

(57) **Abstract**

Systems and techniques are disclosed for predicting lane entry and exit points to guide an autonomous work vehicle operating in fields of tree rows or similar environments. Range sensors capture depth and intensity data, which a trained segmentation model classifies into trunks, canopy, ground, and obstacles. Trunk centroids are clustered and used to estimate lane geometry and a lane centerline. Canopy points are analyzed in down-lane bins to compute density measures, enabling detection of row-end locations. Lane exit points are projected from canopy features onto the lane centerline, and a primary exit point is selected to support headland turns. Control modules generate steering and speed commands that guide the vehicle toward the exit point while monitoring position, speed, and trajectory. The process repeats continuously at sensor update rates, allowing real-time detection of row ends and smooth autonomous transitions between lanes.

## Description

### CROSS REFERENCE TO RELATED APPLICATIONS

This application claims a benefit of, and priority to, U.S. Patent Application 63/718,913, filed November 11, 2024, U.S. Patent Application 63/718,909, filed November 11, 2024, U.S. Patent Application 63/718,900, filed November 11, 2024, and U.S. Patent Application 63/718,891, filed November 11, 2024, the contents of each of which is incorporated by reference in its entirety.

### TECHNICAL FIELD

The present disclosure relates to computer-implemented environmental sensing, localization and path guidance for autonomous work vehicles, and more particularly to machine-learning- and SLAM-based techniques for detecting tree lines and lane centers, predicting lane entry and exit, determining vehicle pose and dynamically planning safe guidance paths for tractors and attached implements in tree-row environments.

### BACKGROUND

Heavy-duty work vehicles used in agriculture, forestry, construction and other industries often traverse rows of trees, poles, piles, or other similar repeating obstacles to perform operations such as seeding, spraying, harvesting or construction. In orchard environments with rows of trees, the overhead canopy is dense, and the rows are narrow, which makes it difficult for conventional guidance systems to rely on global positioning systems (GPS) alone: the canopy can block or degrade satellite signals, resulting in position estimates that are too inaccurate for safe navigation or operation. Existing solutions based on pre-mapped waypoints or GPS therefore struggle to determine the vehicle's location and heading within a row (lane) and to plan headland turns without incurring unnecessary time, cost or damage.

Autonomous operation in these environments also requires continuous awareness of tree-row boundaries and obstacles. Work vehicles typically carry, push or tow implements whose footprint can be wider than the tractor itself; without accurate detection of left and right tree lines and the lane center between them the implement may collide with trunks or overhanging branches. Determining when the vehicle has reached the end of a lane and needs to enter or exit a row is likewise challenging, especially when visual cues are obscured by foliage. Since the vehicle moves one row at a time and perceives obstacles around it as it moves, the guidance system must update its understanding of the environment in real time.

Moreover, orchards contain both static and dynamic obstacles, fallen branches, equipment, workers and uneven terrain, that are not captured in a pre-existing map. Traditional path-planning algorithms that assume free space or fixed obstacles cannot adapt to these changing conditions or to the kinematic constraints of a tractor-implement combination. As a result, there is a need for improved perception, localization and path-planning techniques that can operate in real time under dense canopy, detect lane boundaries and end points, estimate the vehicle's pose within the lane and dynamically generate safe guidance paths that account for the geometry of both the work vehicle and its implement.

### BRIEF DESCRIPTION OF THE DRAWINGS

FIGS. 1A-1B illustrate visual representations of an autonomous work vehicle pulling an implement and operating autonomously in a lane in a field including rows of trees, in accordance with one or more embodiments.
FIGS. 2A-2B are schematic diagrams showing a perspective view and a side view respectively of an autonomous work vehicle, in accordance with one or more embodiments.
FIG. 2C is schematic diagram showing a perspective view of an implement that can be pulled by an autonomous work vehicle to perform a farming operation, in accordance with one or more embodiments.
FIG. 3A is a block diagram of the system environment for an autonomous work vehicle, in accordance with one or more embodiments.
FIG. 3B is a block diagram illustrating components of an autonomous work vehicle, in accordance with one or more embodiments.
FIG. 3C is a flowchart illustrating a process for monitoring an environment of an autonomous work vehicle, in accordance with one or more embodiments.
FIG. 4 is a block diagram of a control system for an autonomous work vehicle, in accordance with one or more embodiments.
FIG. 5A is an example output of a neural network segmenting a range image to generate point clouds for tree trunks, tree canopy, ground, and obstacles, in accordance with one or more embodiments.
FIG. 5B is an example showing trunk point clouds being used to compute trunk centroids, in accordance with one or more embodiments.
FIG. 6 is a block diagram of a line estimation module of a control system of an autonomous work vehicle, in accordance with one or more embodiments.
FIGS. 7A-7B illustrate visual representations of trunk mappings overlaid with right and left tree lines based on computations by a line estimation module, in accordance with one or more embodiments.
FIG. 7C illustrates a visual representation of estimated right and left tree lines and a corresponding lane centerline, in accordance with one or more embodiments.
FIG. 8A illustrates a visual representation of density-based lane end prediction, in accordance with one or more embodiments.
FIG. 8B illustrates a visual representation of lane exit and lane entry determination, in accordance with one or more embodiments.
FIGS. 8C-8D illustrate visual representations of lane entry correction, in accordance with one or more embodiments.
FIG. 9A illustrates a visual representation of an open canopy environment where localization using GPS may be possible, in accordance with one or more embodiments.
FIG. 9B illustrates a visual representation of a closed canopy environment where localization using GPS may not be possible, in accordance with one or more embodiments.
FIG. 10 is a block diagram of a localization module of a control system of an autonomous work vehicle, in accordance with one or more embodiments.
FIGS. 11A-11B illustrate a lane snapping effect of a particle filter localization technique, in accordance with one or more embodiments.
FIG. 11C illustrates weighting of the particles in the particle filter and discarding low scoring particles, in accordance with one or more embodiments.
FIGS. 12A-12B illustrate visual representations of lane center integration and GPS integration, in accordance with one or more embodiments.
FIGS. 13A-13C illustrate exemplary guidance path generation by a path planning module, in accordance with one or more embodiments.
FIGS. 14A-14B illustrate exemplary obstacle avoidance by a path planning module, in accordance with one or more embodiments.
FIGS. 15A-15B illustrate exemplary canopy avoidance by a path planning module, in accordance with one or more embodiments.
FIG. 16 illustrates exemplary mapped obstacle expansion by a path planning module based on localization uncertainty, in accordance with one or more embodiments.
FIG. 17 is a flowchart for a method for estimating tree lines and a lane centerline using a neural network, in accordance with one or more embodiments.
FIG. 18 is a flowchart for a method for predicting lane entry and lane exit for an autonomous work vehicle, in accordance with one or more embodiments.
FIG. 19 is a flowchart for a method for determining a localized pose of an autonomous work vehicle within a field that includes rows of trees, in accordance with one or more embodiments.
FIG. 20 is a flowchart for a method for generating a guidance path for autonomously navigating a work vehicle and an implement within a field that includes rows of trees, in accordance with one or more embodiments.
FIG. 21 is a block diagram illustrating components of an example machine for reading and executing instructions from a machine-readable medium, in accordance with one or more example embodiments.

### DETAILED DESCRIPTION

The Figures (FIGS.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated may be employed without departing from the principles described herein.

### CONFIGURATION OVERVIEW

In dense orchard environments and similar row-based worksites, autonomous work vehicles (e.g., tractors) must operate with precision despite unreliable global positioning signals and the presence of unpredictable obstacles. Rows of trees or poles create narrow lanes, and overhead canopy often blocks satellite reception, making it difficult to determine the vehicle's position using conventional means. Work vehicles may pull or push implements that extend beyond the tractor body, so errors in estimating the lane boundaries can lead to collisions with trunks or overhanging branches.

To overcome the above problems, techniques disclosed herein look to provide an integrated system that senses the environment, detects the lane geometry, determines the tractor's pose even when GPS signal is unavailable and computes guidance paths in real time.

To perceive the lane geometry, the autonomous work vehicle may include a range sensor such as a LiDAR scanner to collect a point cloud of the surroundings. A machine learning model may process each point and assign it a category such as trunk, canopy, obstacle or ground. By grouping the points that correspond to trunks, the system may identify centroids of individual tree trunks along the left and right sides of the lane in which the work vehicle is travelling. The system may employ a line estimator to generate a set of candidate lines for each side using motion estimates and may select lines that best fit the tree trunk centroids detected using the LiDAR scanner. The system may then define a lane centerline based on the selected left and right tree lines and use the lane centerline as a reference for informing subsequent localization, lane entry or exit determination, and path planning guidance.

Further, to know when to leave the current row and where to enter the next one, the system may analyze the same range image used for lane center estimation. After classifying each pixel, the system may group points labelled as trunk into trunk point clouds, and groups points labelled as passable canopy into a passable canopy point cloud. The system may cluster the trunk points to produce centroids for the left and right tree lines and derive a lane centerline from those centroids. For a region of interest that extends along this lane center, the system may partition the passable canopy point cloud into a sequence of left-of-center and right-of-center bins. A sliding-window aggregation may be applied to each bin to compute a density measure that represents how many passable canopy points are present near that portion of the lane. To detect the ends of the current lane, the system may identify, on each side, candidate bins where the passable-canopy density falls below a statistical threshold relative to typical canopy densities for that side, adjust each candidate toward the vehicle by the width of the sliding window and select, for each side, the nearest candidate as the row-end location.

The system may then project the left and right row-end locations to the lane center and designate the lane-exit point as the farther of those projections along the lane. Using a pre-mapped relationship between adjacent lanes, the system may then generate a lane-entry point for the next lane based on the lane-exit point and the difference between the actual exit and the mapped exit. The lane-entry point may further be corrected using a canopy-extent adjustment, which may compare the distance from the last detected trunk to the lane exit with the distance from the first trunk in the next lane to the entry point, and, if necessary, a lane-width adjustment that may shift the entry point laterally when the measured lane width differs from the expected width. The system may then plan a trajectory from the lane exit point to the corrected lane entry point and generate steering and speed commands to guide the vehicle through the lane transition fully autonomously.

To maintain an accurate pose within a lane despite odometry drift and intermittent GPS, a localization module of the work vehicle may propagate its current pose estimate using vehicle motion data. It may then obtain a lane centerline relative to the vehicle from the trunk-detection and line estimation subsystem and, at the current estimated pose, retrieve a corresponding lane centerline from the digital map. By comparing the two lane centerlines, the localization module may compute a lateral offset and a heading difference that indicate how far the vehicle is from the center of the lane and by how much its orientation is rotated. That is, by performing a "lane snapping" operation, the localization module may be able to shift the estimated pose in the digital map sideways and adjust its heading to reduce localization error, thereby aligning the vehicle's predicted pose with the mapped lane center. The lane snapping may be performed by maintaining a set of pose hypotheses using the particle filter; hypotheses that align well with the sensor-derived lane center may receive higher weights and resampled while hypotheses that do not align well with the sensor-derived lane center may receive lower weights and discarded in subsequent resampling. When a GPS position measurement becomes available, the filter may also measure how far each pose hypothesis differs from the GPS position along the lane direction, assigning higher weights to hypotheses that are closer down the lane and resampling the hypotheses accordingly. The weighted average of the resampled hypotheses may be utilized to determine the current pose of the work vehicle. The current pose information may be provided to a downstream guidance module for autonomous navigation of the work vehicle.

A path planning module of the system may produce a short horizon guidance path for the work vehicle and any attached implement. It may use the current steering angle of the work vehicle and the angle of the implement to generate a set of candidate trajectories that satisfy the kinematic limits of the vehicle and implement. These trajectories may include constant curvature arcs, sequences of curvatures that change smoothly, and combinations of curved and straight segments. The density and range of the sampled trajectories may depend on the vehicle's location; for example, tighter turns may be considered near the headland while gentle curves may be emphasized in the middle of a lane.

Each candidate trajectory may be evaluated using a kinematic model to predict the paths of the tractor's front axle, rear axle and implement axle. The predicted paths may be checked against the segmented point cloud and the computed lane center to ensure they do not collide with obstacles or come too close to the trees or canopies. For those candidates that are valid, the system may assign costs based on factors such as the amount of canopy contact, alignment with the lane center or a headland target, and deviation from an optional goal path stored in the map. The costs may be combined using predetermined weights, and the trajectory with the lowest total cost may be selected. A second fine-tuned round of sampling may be performed around the best trajectory to refine the solution before steering and speed commands are computed.

The above-described subsystems of the control system of the autonomous work vehicle may operate together to guide the work vehicle fully autonomously through an orchard. The perception module of the work vehicle may continuously provide updated point clouds and semantic labels. The lane detection module may use this data to maintain an accurate lane center, while the lane transition module may signal when to initiate and complete turns. The localization module may fuse odometry, lane geometry and global positioning measurements to estimate the tractor's pose. The guidance module may use the estimated pose, lane center and obstacle information to generate and update the trajectory that the tractor and implement will follow. By integrating machine learning, probabilistic localization and real time path planning, the system may enable fully autonomous operation in environments where traditional navigation methods fail.

### EXAMPLE WORK VEHICLE AND OPERATING ENVIRONMENT

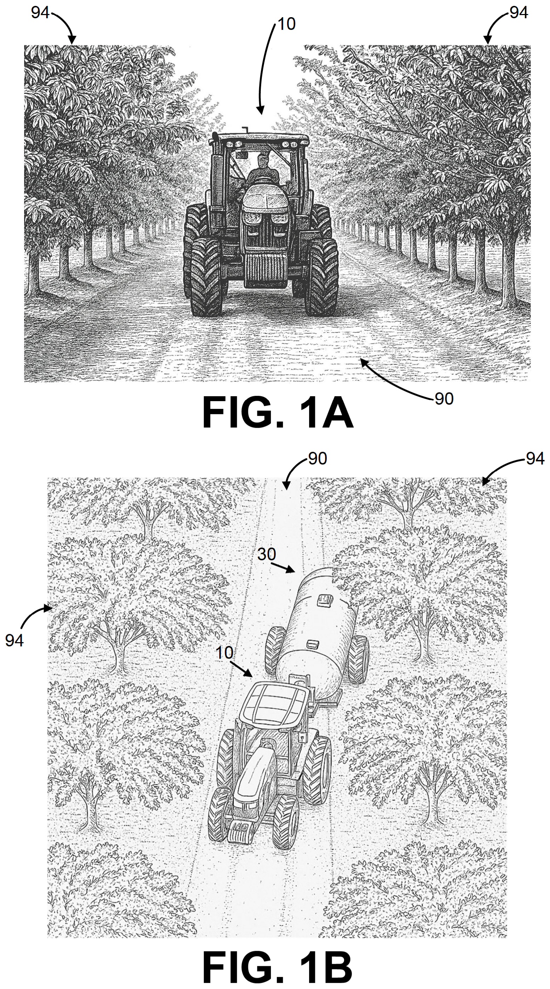

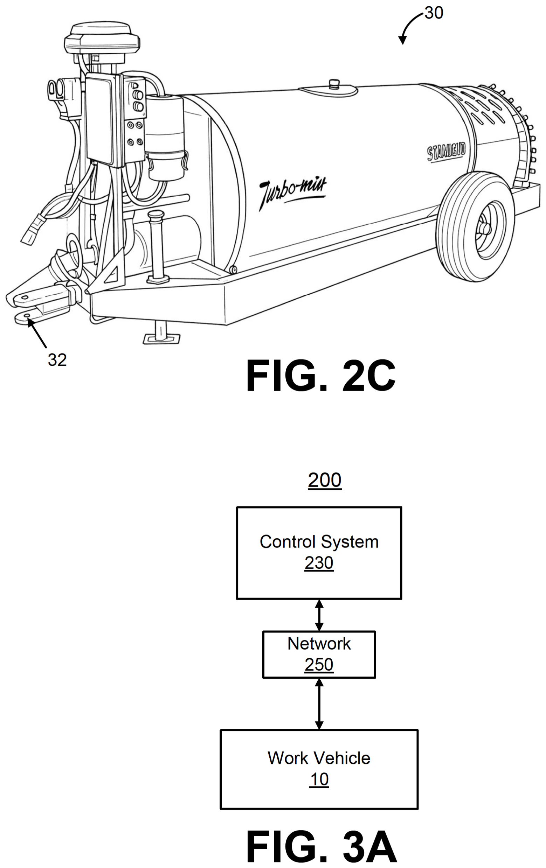

FIG. 1A depicts an autonomous work vehicle 10 operating within a lane 90 of a field comprising rows of trees 94, such as an orchard of apple, walnut or almond trees. In this embodiment, the work vehicle 10 is an agricultural tractor travelling between a left row of trees 94 and a right row of trees 94. The tractor 10 may pull an implement 30 (FIGS. 1B and 2C) behind it. FIG. 1A shows a front view of the tractor 10, FIG. 1B provides a top-down (bird's-eye) view illustrating the lane 90 defined by the tree rows 94, the tractor's 10 chassis 12, and the implement 30 aligned within the lane 90.

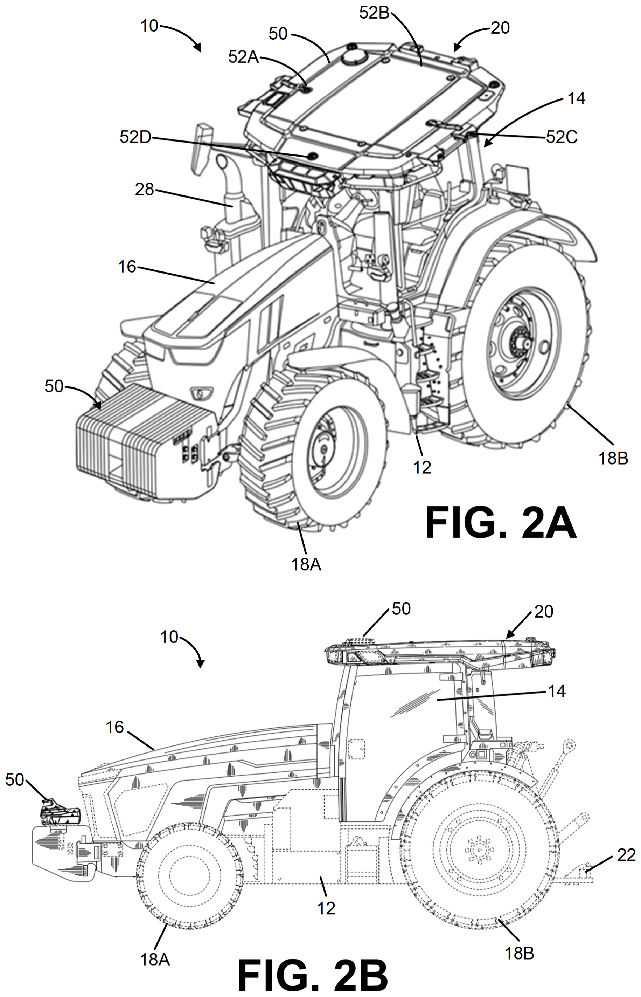

FIG. 2A shows a perspective view of the tractor 10. FIG. 2B provides a side view showing the tractor 10. FIG. 2C provides a perspective view showing an example implement 30. As shown in FIGS. 2A-2B, the tractor 10 may include a cabin 14 mounted to the chassis 12, a powertrain (engine and transmission) housed beneath a hood 16, and ground-engaging wheels 18A, 18B. The chassis 12 may be supported by front wheels 18A and rear wheels 18B. The cabin 14 may include windows to provide visibility for an operator, although the tractor 10 can be operated fully autonomously (without any driver or human presence on the tractor 10) or semi-autonomously. The tractor's 10 engine may be housed within the hood 16 at the front, and an exhaust stack 28 may extend upward from the hood or cabin. The implement 30 may be coupled to a hitch 22 at the rear of the tractor 10 and towed along the lane 90 during spraying, harvesting or other operations. A draft arm or articulation joint 32 may allow relative motion between the tractor 10 and the implement 30. In some embodiments, articulation sensors monitor the angle between the tractor 10 and implement 30 to inform path planning.

A vehicle control system 20 may reside inside the cabin 14 or within a housing adjacent to the engine compartment and interface with and control steering actuators, throttle controls and brake actuators in response to operator input and autonomous commands. To perceive the environment around the tractor 10 and implement 30, the tractor 10 may include a work vehicle perception system (WVPS) 50. The work vehicle perception system 50 may be mounted on a cabin roof (and, in some embodiments, on the front ballast) and may comprise several sensor pods 52A-52D. Each sensor pod 52 may house multiple imaging devices arranged to provide overlapping fields of view around the tractor. In some embodiments, each pod 52 may contain four imaging devices arranged in a "double-back" configuration: first and third imaging devices forming a first stereoscopic pair, and second and fourth imaging devices forming a second stereoscopic pair, and the intermediate (second and third) imaging devices forming a third stereoscopic pair. The optical axes of the devices may be cross-eyed such that they converge toward a common side of the pod 52, thereby increasing the overlap of their fields of view and ensuring that objects occluded in one image are visible in another. This arrangement may enable the WVPS 50 to generate three three-dimensional (3D) images per pod 52 using stereo disparity techniques, and the four pods 52 together may provide twelve 3D images covering 360° around the tractor 10.

In addition to stereo cameras, the WVPS 50 may incorporate other imaging and sensing mechanisms that supply sensor data beyond the visual spectrum. For example, the WVPS 50 may include one or more LiDAR units that emit laser pulses to produce range images comprising per-pixel depth values; multispectral or hyperspectral cameras that capture reflectance at different wavelengths to distinguish plant canopy from ground; thermal or infrared cameras to detect temperature differences; and other sensors such as humidity, light, speed and inertial sensors. These sensors may be mounted on the same pods 52 or on separate mounts and electrically coupled to a controller of the WVPS 50. The controller may acquire the stereoscopic images and/or the range images, process them to derive depth information and surface classifications, and communicate with the vehicle control system 20 to autonomously control operations of the tractor 10. In some embodiments, the WVPS 50 may further include implement-mounted sensors, such as flow-rate monitors and pressure sensors that measure liquid delivery in the implement 30, and articulation sensors that measure the angle between the tractor 10 and the implement 30. The combined sensor suite therefore provides color, depth and multispectral data covering the full field of view and the state of the vehicle 10 and the implement 30.

FIG. 2C depicts a perspective view of the implement 30, which in this example is an air blast sprayer used to apply air or liquid treatments to the trees 94. The implement 30 may include a chassis supported by wheels, a tank for storing liquid, a fan housing with a high-capacity fan that draws air through an inlet and discharges it through one or more nozzles directed sideways toward the tree rows. A pump may deliver liquid from the tank to the nozzles, and the air stream atomizes the liquid into a fine spray. The implement 30 may be connected to the tractor via the hitch 22 and may be powered by the tractor's power take-off (PTO) shaft or by an independent engine. Sensors mounted on the implement may monitor flow rate, pressure, spray pattern or other parameters, and the implement's articulation angle relative to the tractor may be measured by an implement articulation sensor 32. These measurements form part of the sensor data that may be used by the vehicle control system 20 to adjust speed and steering when maneuvering around obstacles, travelling down the lane 90, or making turns.

### EXAMPLE SYSTEM ENVIRONMENT

FIG. 3A illustrates a system environment 200 in which one or more autonomous work vehicles 10 operate under the supervision of a central control system 230 via a communication network 250. Each work vehicle 10 may be structurally similar to the tractor described in FIGS. 1A-2C, including a vehicle control system 20 and a work vehicle perception system (WVPS) 50. The network 250 may be a local area network (LAN) such as a Controller Area Network (CAN), a wide area network (WAN) such as the Internet, a mobile or cellular network, or a combination thereof. It conveys sensor data, control commands and status updates between the work vehicles 10 and the control system 230.

In embodiments with multiple vehicles 10, the control system 230 may coordinate their operation by receiving perceptual and status data from each vehicle 10, maintaining a shared obstacle map or occupancy data for the worksite, assigning tasks or rows (e.g., one or more lanes 90) to individual vehicles 10, and transmitting high-level directives and updated guidance paths back to the vehicles 10. The control system 230 may also store historical data about the field, previous operations and machine states, and may interface with external systems such as weather services or cloud-based data repositories. In some configurations, the control system 230 may execute portions of the tree-line estimation, lane entry/exit detection, localization and guidance algorithms on behalf of the vehicles 10, off-loading computationally intensive tasks from the on-board processors. In other configurations, the vehicles 10 perform these computations locally and the control system 230 performs supervisory functions such as work division, progress monitoring and remote diagnostics. The system environment 200 thus supports both single-vehicle autonomous operation and coordinated multi-vehicle deployments.

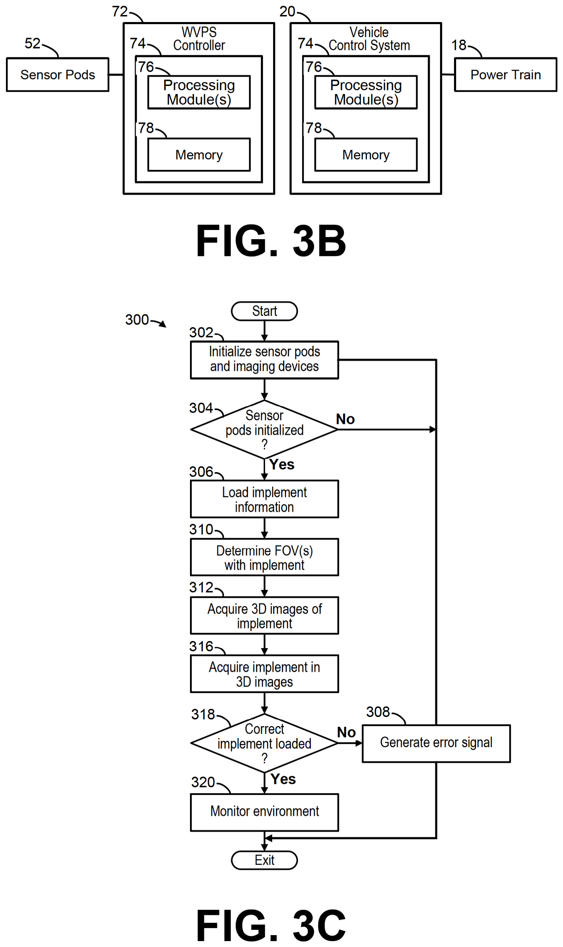

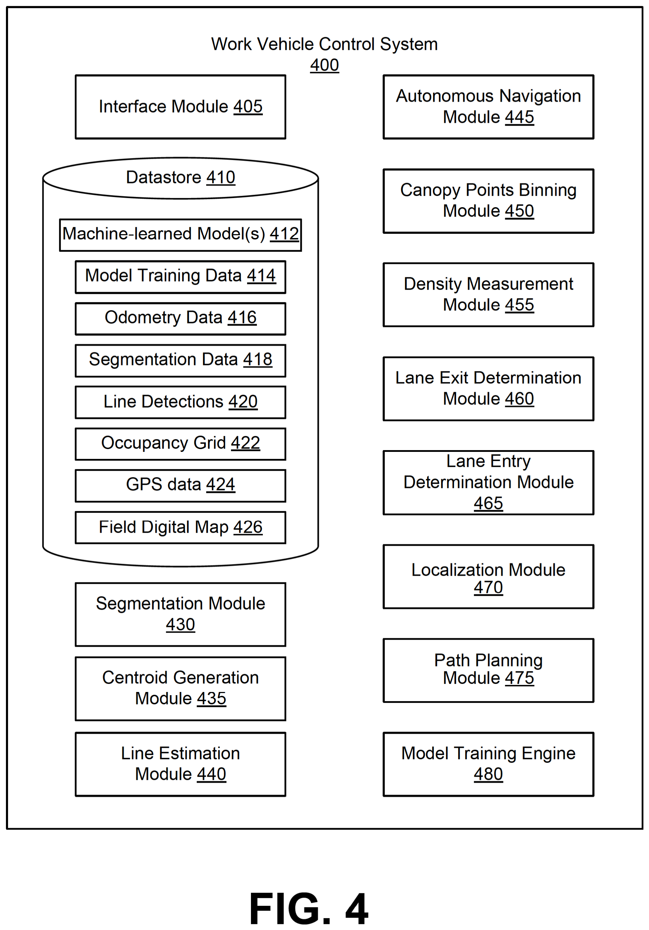

FIG. 3B is a block diagram illustrating the principal components of an autonomous work vehicle 10. The vehicle control system 20 includes a computing device 74 having one or more processing modules 76 and a memory 78. The memory 78 stores programming instructions and data for executing the modules (e.g., the modules described in connection with FIG. 4). The vehicle control system 20 may interface with actuators such as steering motors, throttle controls, brake actuators and hitch controllers to actuate powertrain 18 of the tractor 10 and/or the implement 30 based on guidance commands. It may also interface with odometry sensors (e.g., wheel encoders, steering angle sensors, inertial measurement units) that provide vehicle motion data.

The WVPS 50 may comprise multiple sensor pods 52 mounted on the tractor 10, together with a WVPS controller 72. Each sensor pod 52 may include stereo imaging devices, LiDAR units, multispectral or hyperspectral cameras, infrared cameras and other sensors as described above. The WVPS controller 72 acquires images and range data from the sensor pods 52, initializes and calibrates the sensors, and generates depth and intensity information based on the range images. The WVPS controller 72 may also receive configuration information from the vehicle control system 20 regarding the type, location and dimensions of the implement 30. It may use this information to determine fields of view in which the implement should appear, generate three-dimensional (3D) images from stereo image pairs, and verify that the implement attached to the vehicle 10 matches the expected type and dimensions. If the implement does not match or if a sensor pod fails to initialize properly, the WVPS controller 72 may transmit an error message to the vehicle control system 20 to disable certain functionality (e.g., disable fully autonomous operation mode) of the vehicle 10.

The sensor data produced by the WVPS 50 may be processed by the vehicle control system 20 to perform the autonomous operations described in this disclosure. The autonomous functionality may be achieved by modules executed by the computing devices 74 of the vehicle control system 20 and the WVPS controller 72. Alternatively, some or all of these modules may run on the control system 230; in that case, sensor data and odometry data may be transmitted to the control system 230 via the network 250, and the results may be transmitted back to the vehicle 10. The vehicle control system 20 may also implement safety functions such as monitoring WVPS status, halting the vehicle when an object (human, animal or obstacle) is detected within a stopping distance, and monitoring implement attachment and configuration.

FIG. 3C is a flowchart illustrating a process 300 for monitoring the environment and controlling the work vehicle 10. At step 302 the WVPS controller 72 initializes each imaging device and other sensors (e.g., LiDAR) of the sensor pods 52. It directs each imaging device to capture one or more images and checks that the images meet quality criteria (e.g., focus, cleanliness of lenses, clear view, no occlusions or other artifacts) and that the LiDAR and multispectral sensors return valid depth and intensity values. If any sensor fails to initialize or the image quality is insufficient, the WVPS controller 72 may generate an error message and transmit it to the vehicle control system 20 (step 304). The vehicle control system may then halt the vehicle or switch to a degraded mode of operation.

Assuming the sensors initialize correctly, the WVPS controller 72 may obtain configuration data for the implement 30 from the vehicle control system 20 (step 306). It may use this data to determine the expected fields of view in which the implement should appear and captures images to verify the presence and dimensions of the implement (steps 308-310). If the detected implement does not match the expected type or dimensions, the WVPS controller 72 may transmit an error message (step 304). Otherwise, the process proceeds to monitoring the environment (step 312) and perform the functionality described in detail in the remainder of this disclosure.

The vehicle control system 20 and the WVPS controller 72 may be implemented by one or more computing devices 74. Each computing device 74 may include processing modules 76 and memory 78 that stores program instructions and data. The computing devices 74 may be unitary, located on the vehicle 10, or distributed across multiple devices on the vehicle and remotely (e.g., at the control system 230). They communicate with each other via the network 250, which may comprise a CAN bus for low-level actuator and sensor communications on the vehicle 10 and one or more wired or wireless links (e.g., Ethernet, Wi-Fi, cellular) for communications with the control system 230 and other vehicles 10. The controllers may be interfaced with user devices such as touchscreens, keyboards or joysticks to allow an operator to monitor system status and intervene when necessary. By providing flexible deployment of computational modules and robust communication channels, the system environment 200 supports fully autonomous operation, remote supervision, and multi-vehicle coordination.

### EXAMPLE WORK VEHICLE CONTROL SYSTEM

FIG. 4 is a block diagram illustrating components of an example work vehicle control system 400, in accordance with one or more embodiments. FIG. 4 shows that the control system 400 may include an interface module 405 that provides user-facing functions and exchanges messages with on-board controllers and remote servers. The control system 400 may further host a segmentation module 430 that applies trained machine-learning models to range images to label points as trunk, canopy, obstacle or ground; a centroid generation module 435 that clusters trunk point clouds to compute trunk centroids; and a line estimation module 440 that generates and scores candidate tree lines based on odometry and selects the best-fitting left and right tree lines. The system 400 may also include a canopy points binning module 450 that partitions canopy points into left-of-center and right-of-center bins along a lane center, a density measurement module 455 that computes sliding-window density measures to identify gaps in canopy coverage, a lane exit determination module 460 that designates a lane-exit point based on the density measurements and a lane entry determination module 465 that generates and corrects a lane-entry point for the next lane. A localization module 470 may maintain pose hypotheses, apply lane-center corrections and GPS-based down-lane corrections, while a path planning module 475 may generate candidate trajectories, evaluate them against obstacle and canopy information, and select the optimal guidance path. An autonomous navigation module 445 may interface with a vehicle control system to translate the selected guidance path into steering and speed commands for fully autonomous operation of the vehicle 10. The control system 400 may further include a model training engine 480 that trains and updates the machine-learned models used by the segmentation module 430.

FIG. 4 also shows that a datastore 410 is operatively coupled to the modules of the control system 400 and persists data and executable artefacts used by the system's workflows. By way of example and not limitation, the datastore 410 may store machine-learned models 412 (e.g., weights and architectures for semantic segmentation networks and lane-estimation filters); model training data 414 (e.g., labelled range images, per-pixel depth and intensity values); odometry data 416 (forward displacement and yaw change values from motion sensors); segmentation data 418 (point clouds with trunk, canopy, obstacle and ground labels); line detections 420 (estimated left and right tree lines and associated scores); an occupancy grid 422 (dynamic obstacle map constructed from sensor data, canopy point cloud data indicating canopy density profiles); GPS data 424 (timestamped global positioning measurements); and a field digital map 426 (geolocated digital representations of lane center lines, tree lines and headlands for the worksite).

The datastore 410 and the modules of FIG. 4 may be implemented in software, hardware or any combination thereof, and may be deployed on a single processor within the vehicle 10, distributed across multiple on-board processors, or partitioned between the vehicle and a remote control system 230 in the broader system environment. In various embodiments, each module is realized as program code stored on non-transitory media and executed by one or more processors. In other embodiments, selected functionality may be accelerated or embodied in dedicated logic (e.g., FPGAs or ASICs). Each module of FIG. 4 may include all or part of the example computing architecture described with reference to FIG. 23.

In some embodiments, the work vehicle control system 400 of FIG. 4 may operate within the system environment 200 of FIG. 3A and interface with both an on-board perception stack of the vehicle and the external supervisory infrastructure. Through its interface module 405 and communication hardware, the control system 400 may exchange sensor data and command messages over the network 250, allowing some or all of its modules to execute on a remote control system 230 while others run on the vehicle 10. Data ingested by the datastore 410, such as segmentation output, trunk centroids, line detections and occupancy grids, may originate from the work vehicle perception system 50 via the WVPS controller 72; those data may be processed by the segmentation module 430, centroid generation module 435, line estimation module 440, canopy points binning module 450 and density measurement module 455 to estimate tree lines, lane centers and canopy density profiles. The lane exit determination module 460 and lane entry determination module 465 may use the density measures and digital maps to compute transition points between rows, while the localization module 470 may fuse odometry, GPS data, line detections and occupancy information to estimate the vehicle's pose relative to the digital map. A path planning module 475 and autonomous navigation module 445 may then generate and execute guidance commands that are sent to the vehicle control system 20, which actuates the tractor 10 and implement 30. In this way, the control system 400 may operate in conjunction with sensor outputs from the WVPS 50, the pose and map data maintained by the environment 200, and the actuation capabilities of the vehicle control system 20 to deliver end-to-end autonomous operation of the vehicle 10.

### EXAMPLE TREE LINE AND LANE CENTERLINE ESTIMATION

Functionality of tree line and lane centerline estimation will be explained in connection with FIGS. 4-7C. For autonomous operation, a range sensor such as a LiDAR scanner mounted on the work vehicle 10 may periodically capture a two-dimensional range image of the field. The sensor may scan the environment at a specified update rate (e.g., 10 Hertz) and produce an array of pixels, each pixel storing a depth value that indicates the distance from the sensor to the reflecting object and, in some implementations, an associated intensity value (e.g., a measured intensity of the return signal). A capture module associated with the range sensor may format these returns into a range image by projecting the three-dimensional point cloud onto a planar grid defined by azimuth and elevation angles. The resulting range image may be stored in datastore 410 for further processing.

The segmentation module 430 may apply a trained machine-learned model 412 to each captured range image in real-time to assign a class label to every pixel. The machine-learned model 412 may comprise parameters of a semantic segmentation network that is executed by the segmentation module 430. A model-training engine 480 may train this network offline using a training dataset 414 stored in the datastore 410. The training dataset 414 may include a large number of historical range images captured by range sensors similar to those mounted on the work vehicles. For each range image in the dataset, a ground-truth label map may be provided that assigns every pixel a categorical label indicating whether that pixel corresponds to a tree trunk, canopy, obstacle or ground surface. The dataset 414 may also store, for each pixel, the depth value and intensity value measured by the sensor. The training data may cover a variety of orchard conditions, different tree spacings, canopy densities, and terrain types, and include simulated obstacle instances; for example, three-dimensional models of telephone poles and other non-trunk objects may be inserted into synthetic point clouds and then projected into the range images to teach the network to distinguish obstacles from trunks. The dataset may be augmented with random translations, rotations and noise to improve the model's generalization to unseen environments.

During training the model training engine 480 may initialize the weights of a transformer-based semantic segmentation network and iteratively update those weights to minimize a loss function that measures the difference between the predicted pixel labels and the ground-truth labels. During training, the model may learn to recognize the geometry and appearance of tree trunks, canopy, obstacles and ground surfaces. The engine 480 may apply supervised learning techniques: it may feed each range image into the network, compute the per-pixel class probabilities through the network's layers and compare them to the corresponding ground-truth labels using a loss function such as cross-entropy. It may compute gradients of the loss with respect to the network's weights using back-propagation and adjusts the weights using an optimization algorithm such as stochastic gradient descent or Adam. Training may be performed from scratch. The engine may also perform data augmentation on the fly, for instance by injecting synthetic obstacle point clouds into training scenes or by performing affine transformations on the input range images, to improve robustness. Training may continue over many epochs until the segmentation accuracy converges.

Upon completion of training, the model training engine 480 may serialize the trained weights and store them in the datastore 410 as the machine-learned model 412. The segmentation module 430 may retrieve the model 412 at run-time, load it into memory and apply it to each newly captured range image to produce the per-pixel labels. If the training dataset 414 is updated or if additional training is performed, the model training engine 480 may retrain the network and update the model 412 accordingly, thereby ensuring that the segmentation module 430 continues to perform accurately as new field conditions are encountered.

At run-time the segmentation module 430 may pass the range image through the trained network and receive, for each pixel, a categorical label that classifies that pixel as representing a trunk, canopy, obstacle or ground. The segmentation module 430 may map these labels back onto the original three-dimensional point cloud by associating each pixel with its corresponding range and intensity values. The module may thus produce, e.g., four separate point clouds: a trunk point cloud comprising only those points whose labels indicate tree trunks, a canopy point cloud for foliage points, an obstacle point cloud for non-foliage objects such as poles or debris, and a ground point cloud.

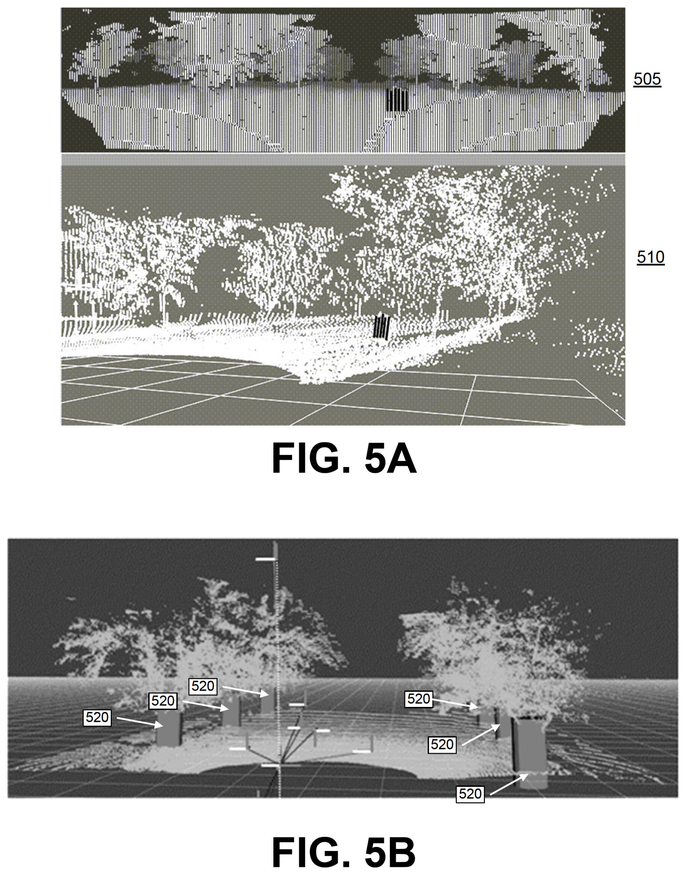

FIG. 5A illustrates the operation of segmentation module 430. The upper portion 505 of FIG. 5A shows an image representation of the LiDAR returns after processing by the trained segmentation network. Pixels corresponding to tree trunks, canopy, obstacles and ground maybe color-coded (e.g., different colors for tree trunks, impassable obstacles, passable canopy, and ground) to highlight their respective class assignment. The lower portion 510 of FIG. 5A displays the same scene in three dimensions as point clouds. This depiction demonstrates how the segmentation module 430 may map the per-pixel labels to the range image to generate one or more trunk point clouds by isolating a particular type of return (e.g., trunk) from the dense point cloud while suppressing other types of points (e.g., passable canopy, ground, impassable obstacle). Data generated by the segmentation module 430 (e.g., four separate point clouds) may be stored as the segmentation data 418 and the occupancy grid 422 (e.g., passable canopy density profile)

The centroid generation module 435 may operate on the trunk point cloud generated by the segmentation module 430 to identify the physical positions of individual trees. In some embodiments, the module 435 may group trunk points into clusters by applying a proximity-based clustering algorithm that assigns points to the same cluster when their Euclidean distance is below a predefined threshold. Each cluster may correspond to a single tree trunk. For every cluster, the module 345 may compute a centroid by averaging the x-, y- and z-coordinates of all trunk points within that cluster. The centroid may represent the estimated position of the tree trunk relative to the work vehicle. The centroid generation module 435 may further determine whether each centroid lies to the left or right of the vehicle's longitudinal axis by evaluating the sign of its lateral coordinate. Module 435 may output two lists of centroids, one for the left tree line and one for the right tree line.

FIG. 5B illustrates the output of the centroid generation module 435. The trunk points have been clustered into discrete groups 520 representing individual trees, and the centroids of these groups may be shown as markers at the base of each cluster. The centroids 520 on the left side of the lane and the centroids 520 on the right side of the lane may then be used by the line estimation module 540 to fit left and right tree lines, compute a midline between them and ultimately derive a lane centerline for guiding autonomous operation of the work vehicle.

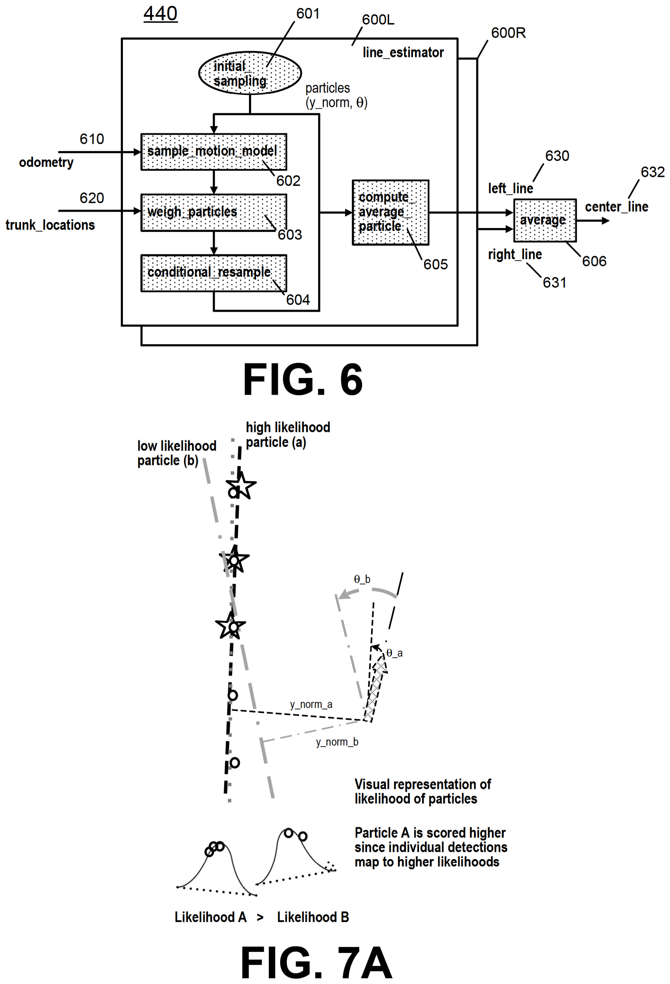

Referring again to FIG. 4, the line estimation module 440 may receive the trunk centroids produced by the centroid generation module 435 as well as vehicle odometry data 416 describing the work vehicle's forward displacement and yaw change, and produce estimates of the left and right tree lines as well as a lane centerline that will be used by downstream modules of the autonomous navigation pipeline. Functionality of the line estimation module 440 is described in detail below in connection with FIGS. 6 and 7A-7C.

FIG. 6 illustrates that the line estimation module 440 may maintain two independent particle filters, one for the left tree line and one for the right tree line. Each particle filter may maintain a set of candidate lines, where each candidate line is represented by a two-dimensional line equation in the vehicle frame. For example, each particle filter may maintain a set of hypothetical lines expressed in a vehicle-centered coordinate frame, where each particle encodes a lateral offset y_norm from the vehicle's longitudinal axis and a heading angle θ that define a candidate line in the horizontal plane.

At initialization, an initial sampling block 601 may draw a plurality of candidate lines around a prior estimate of the row geometry. The prior may specify an expected row spacing and approximate parallelism of the tree rows; the candidate lines for the left and right sides are thus seeded at lateral offsets corresponding to the nominal lane width and at orientations approximately aligned with the vehicle's longitudinal axis. The estimator 600 may update these candidate lines at a predetermined frequency as the vehicle moves through the orchard.

During operation, a sample motion model block 602 may propagate each particle forward using odometry inputs 610. This yields a prediction of where that line would be relative to the vehicle if the tractor had moved according to the odometry. In technical terms, this shifts the particle's y_norm and θ according to the sensed translation and rotation of the vehicle. The odometry 610 may describe how the tractor has moved since the last update. For example, the odometry 610 may indicate a forward displacement and a yaw change from the vehicle's wheel-encoder and steering-angle measurements; and the values may be used by the sample motion model block 602 to propagate each candidate line's lateral offset and orientation forward in time. By predicting how a hypothesized row would shift as the tractor advances and turns, the estimator 600 may maintain continuity in its left and right line estimates.

A weigh particles block 603 may then assign a likelihood to each particle by comparing the candidate line to the trunk centroids detected by the module 435. The centroids may provide the geometric landmarks that the estimator 600 uses to score its candidate lines. For every centroid and every candidate line, the block 603 may compute a perpendicular distance to the line and evaluate a Gaussian likelihood function. The weight of the candidate line is the sum of these likelihoods, candidate lines that pass near more trunk centroids receive higher weights or scores, while those farther away from the detections receive lower weights or scores.

A conditional resample block 604 may then replicate high-scoring particles and discard low-scoring particles to form an updated set of hypotheses. It discards or down-weights low-scoring candidate lines and replicates or up-weights high-scoring candidate lines, thereby concentrating the representation on the most plausible line positions. A compute average particle block 605 may compute the mean y_norm and θ of the resampled particles to produce an estimated line for that side (left or right). That is, it computes a weighted average of the candidate lines to yield a single estimate for each side. This process of the estimator 600 may run concurrently for the left and right tree rows at a predetermined control frequency (e.g., 10 times a second based on LiDAR data captured in real-time at a similar frequency). In some embodiments, after weighting, the estimator 600 may identify the candidate line out of the set of lines with the highest weight or score and output that candidate line as the estimated left (or right) tree line.

As shown in FIG. 6, odometry inputs 610 and trunk-locations (centroid) inputs 620 feed into the line estimator 600. Within each estimator 600L, 600R, the sample motion model block 602 may update the particle states based on the odometry inputs 610, the weigh particles block 603 may evaluate the likelihood of each particle using trunk detections 620 (from centroid generation module 435), and the conditional resample block 604 may produce a refined particle set, which may be used by the compute average particle block 605 to output the estimated left line 630 and right line 631. An average block 606 may take these two line estimates and compute a lane center line 632 by averaging the lateral offsets and orientations over a predetermined look-ahead distance. That is, the average block 606 may compute a midline that is substantially equidistant from the two estimated lines over a predetermined look-ahead distance. The lane center line 632 may be provided to downstream modules of the control system 400.

Figure 7A illustrates how the line estimation module 440 assigns likelihoods to different particles. Two hypothetical lines are drawn through a set of detected trunks. Particle A (broken line) lies close to the trunk detections 620 and has a smaller perpendicular distance y_norm_a for each detection and a smaller heading error θ_a , while particle B (dash-dotted line) is offset farther from the trunks, yielding a larger y_norm_b and a larger θ_b. The Gaussian likelihood curve beneath shows that the integrated likelihood for particle A exceeds that for particle B; accordingly, the weigh particles block 603 would assign a higher weight to particle A and a lower weight to particle B.

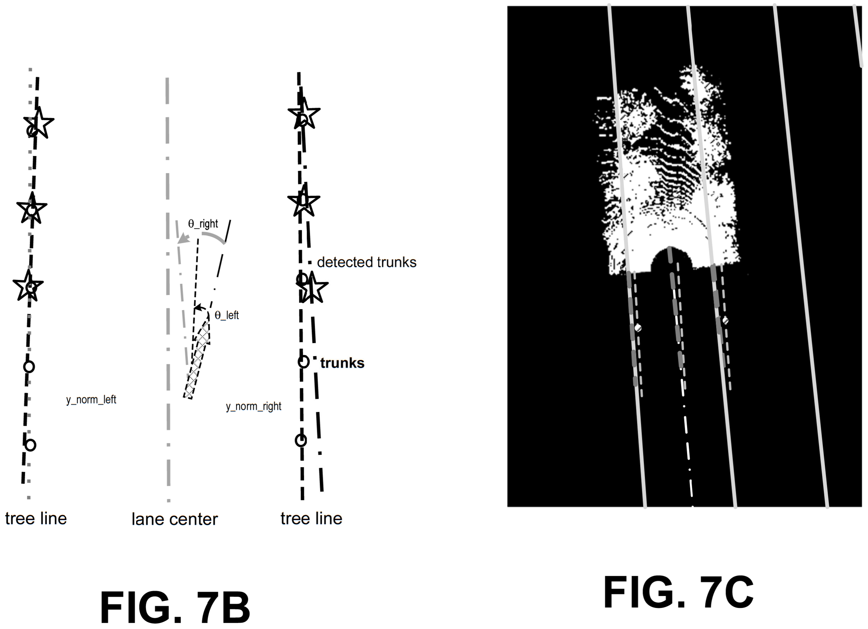

FIG. 7B shows the outputs of the two particle filters after resampling. On the left and right sides of the lane, the system has estimated tree lines (dashed lines) that pass through the computed trunk centroids (circles). The lateral offsets y_norm_left and y_norm_right represent the distances from the vehicle's longitudinal axis to the left and right lines, and the angles θ_left and θ_right represent their orientations. The module averages the left and right line parameters to produce the lane center line (dash-dot line) shown in the center of the lane. FIG. 7C overlays the estimated lines on the point cloud and the geolocated digital map 426 of the field. The white dash lines on the left and right sides depict the estimated left and right tree lines; the white dash line in the center is the computed lane center line. As the odometry propagates the candidate lines from one time step to the next, lines that remain aligned with the actual sensed tree row are preserved, while those that diverge are down-weighted and removed. The result is the pair of white dashed lines that represent the estimated left and right tree lines. FIG. 7C illustrates that the lane center line is computed by averaging the final left and right line estimates and is used for navigation.

Once the line estimation module 440 has produced the lane centerline, an autonomous navigation module 445 may compute commands to control the work vehicle 10 based on this centerline. For example, module 445 may determine the current lateral offset and heading error of vehicle 10 relative to the lane centerline by projecting the vehicle's pose onto the centerline. That is, module 445 may compute a lateral error as the perpendicular distance between the vehicle's current position and the lane center line, and a heading error as a difference between the vehicle's orientation and the lane center line's orientation.

It may then generate steering and speed commands that reduce these errors; for example, it may apply a proportional integral derivative controller that steers the vehicle toward the centerline and adjust forward speed to maintain a safe trajectory. These commands may be transmitted to vehicle control system 20, which actuates the steering mechanism and throttle accordingly. As new trunk detections and odometry measurements arrive, the line estimation 440 and autonomous navigation modules 445 operate in a control loop: the line estimator updates the left and right line estimates and recomputes the lane centerline, and the autonomous navigation module 445 may use the updated centerline to continually adjust the steering and speed commands. In this manner the work vehicle follows in real-time the computed lane geometry and navigates through the field autonomously.

### EXAMPLE LANE ENTRY AND EXIT PREDICTION

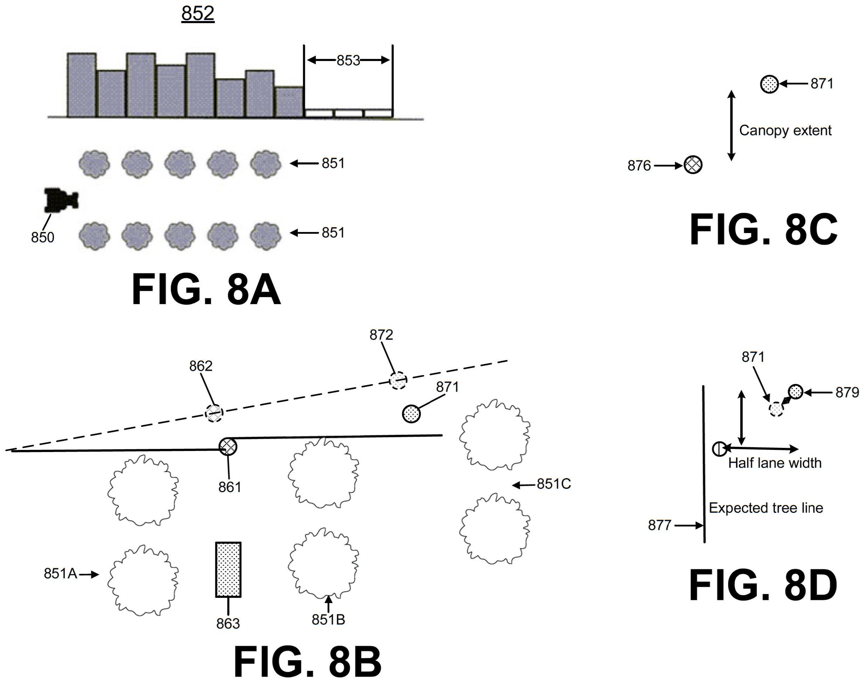

Functionality of lane entry and exit prediction will now be explained in connection with FIGS. 4 and 8A-8D. After the segmentation module 430 has labelled LiDAR returns and produced separate passable canopy, trunk, impassable obstacle and ground point clouds, the centroid generation 435 and line estimation modules 440 compute a lane center line from the trunk centroids. The per frame passable canopy points and the lane center lines may be stored in the segmentation data 418 and used to update an occupancy grid 422. At a regular update rate, e.g., ten cycles per second, these data may flow into the lane-exit prediction pipeline. In this pipeline, the canopy points binning module 450 may receive the passable canopy point cloud 418 and divide it, relative to the lane center, into a sequence of spatial bins on the left and right of the lane.

That is, the binning module 450 may define a rectangular region of interest that extends a predetermined distance ahead of the vehicle 10 along the lane center and spans the width of the lane. For every passable canopy point 418, the module 450 may determine whether the point lies to the left or the right of the lane center by comparing the point's lateral coordinate to the lane center. It may then assign the point to one of "left-of-center" bins or one of "right-of-center" bins based on its down-lane coordinate. Each bin corresponds to a fixed interval along the lane center and accumulates a count of passable canopy points that fall within its bounds. Points labelled as impassable obstacles or ground are ignored, so that only canopy returns contribute to the bin counts. The binning module 450 may repeat this process for each incoming LiDAR frame, maintaining an ordered list of canopy counts for the left and right sides of the lane in respective sets of bins. This data together may represent and be stored as the occupancy grid 422 in the data store 410.

The density measurement module 455 may then use these per-bin counts on the left side and the right side to detect where a row of trees terminates. In some embodiments, as the vehicle moves down the lane, it may slide a fixed-width window over the sequence of bins on each side (e.g., a sliding window for the left side may be equal to three most recently measured consecutive bins on the left side) and compute, for every bin, an aggregated density value based on, e.g., the sum or average or ratio or other predetermined metric of passable canopy counts across the bins covered by the sliding window.

FIG. 8A depicts the operation of the binning module 450 and the density measurement module 455. The lower portion of the figure shows a tractor 850 travelling between two rows of canopy clusters 851. The upper portion shows a bar chart 852 that represents the aggregated canopy density across successive bins for the left tree line. Taller bars indicate high canopy density (i.e., a greater point count) within the corresponding bins, while shorter bars toward the right indicate a gap in the canopy, the location where the row ends. A sliding-window overlay 853 spans several adjacent bars; the density measurement module 855 uses this window to compute a smoothed density measure for each bin.

The binning module 450 and the density measurement module 455 produce, for each side of the lane, a time-series of aggregated canopy-density values. These values may be computed by summing the counts of passable-canopy points across a sliding window of adjacent bins as the work vehicle moves down the lane. The lane exit determination module 460 may receive the smoothed density measures from the density measurement module 455 and evaluate them to determine where each tree row ends.

During an initial learning period spanning a configurable number of LiDAR frames, module 460 may compute, for every bin on each side, a mean and a standard deviation of the sliding-window density. These statistics may provide a baseline characterizing the typical canopy density for that bin. After the learning period, the module 460 may compare each new sliding-window density value (i.e., value corresponding to a most recent detected sliding window of bins for each side) against a learned threshold derived from the baseline; for example, a bin is considered to be an outlier when its smoothed density falls below the mean minus a selected multiple of the standard deviation. Such outlier bins may be flagged by the module 460 as candidate lane-end bins because a significant drop in canopy density indicates that the tree row may be ending.

For the candidate lane-end bins whose smoothed density falls below the threshold, module 460 may group adjacent below-threshold bins on each side into candidate canopy gaps and evaluate the length of each candidate gap to identify candidate gaps on each side that exceed a learned or preset tree-gap distance as candidate row ends. The module 460 may then compare candidate gaps identified as candidate row ends on the left side and the right side along the lane to determine whether a gap on one side overlaps (within a tolerance) a gap on the opposite side. By performing the comparison, the module 460 may identify overlapping gaps that indicate a genuine end of both tree lines. For the confirmed overlapping gaps, the module 460 may identify the sliding window of bins on the left side and on the right side, and the module 460 may move an indicator of the candidate bin backward along the lane by an amount equal to the width of the sliding window (i.e., indicate the first or earliest of the bins of the candidate window as the low density bin). This adjustment compensates for the fact that the sliding window sums densities from multiple bins: the smoothed density associated with a candidate bin actually reflects canopy extending further up-lane by the window width, so shifting the candidate backward positions it at the start of the low-density region. In the case of multiple confirmed overlapping gaps, the module 460 may select the adjusted indicator of the candidate bin that is nearest to the vehicle along the lane center as the row-end location for that side. Module 460 may then project the selected row-end locations for both sides onto the lane center line and designate the farther of the two projections as the primary lane exit point for the current lane. For example, the primary lane exit point may correspond to the earliest point along the lane center where the canopy ceases on either side, and represents the location at which the vehicle may begin its headland turn. As another example, the primary lane exit point may be computed dynamically based on the left and right row-end locations and may be offset to one or the other side of the lane center line based on the turning direction, dimensions of the vehicle and/or the implement, canopy density profile in a region proximate to the left and right row-end locations, vehicle speed and turning radius, and the like. The module 460 may provide both the left and right row-end locations, and optionally further provide the primary lane exit point to the downstream guidance system for use as inputs to plan a lane exit maneuver, selecting the appropriate side depending on the planned turn direction.

FIG. 8B shows an example of lane-exit determination. The figure depicts the canopy clusters corresponding to three rows of threes 851A-851C. The rows 851A-85B define the current lane, and a rectangular box 863 between those rows represents the tractor's position. As described above, the density measurement module 455 and lane exit determination module 460 may analyze the passable-canopy counts and identify the left and right row-end locations; the farther of those projections onto the lane center becomes the primary lane exit point 861 shown in FIG. 8B as a hatched circle ahead of the tractor 863.

The lane-entry determination module 465 may operate after the primary lane exit point 861 has been selected for the current lane. Module 465 may retrieve, from the geolocated digital map 426, a lane-end relationship that specifies how the lane ends of the current lane (between tree lines 851a and 851b) correspond to the lane ends of the next lane (between tree lines 851b and 851c). In this relationship the map data 426 may include a mapped lane exit point 862 for the current lane and a mapped lane entry point 872 for the next lane. Module 465 may compare the detected primary lane exit point 861 to the mapped lane exit point 862 by projecting both points onto the lane center for the current lane and computing a difference vector between them. This difference may capture how far earlier or later the actual canopy end of the current lane occurs relative to the map prediction. For example, the difference may capture the difference between the detected lane exit and the mapped lane exit in two dimensions in a global coordinate space. Module 465 may apply this difference to the mapped lane entry point 872 for the next lane to produce a computed lane entry point 871. By shifting the mapped entry by the same offset that separates the detected exit 861 from its mapped counterpart 862, the system may ensure that the entry point is aligned with the physical geometry of the field rather than the nominal geometry stored in the map. Module 465 may provide the computed lane entry point 871 to the guidance planner, which uses it to plan the turn into the next lane.

FIG. 8C illustrates a canopy-extent correction that may be applied to the lane entry point 871 computed by the lane entry determination module 465. Before leaving the current lane, the system may measure a canopy extent by determining a down-lane distance between the last detected trunk in that lane and the designated primary lane exit point 861. When the vehicle approaches the next lane, module 465 may identify a trunk 876 nearest a tree line 851B/851C of that lane and compute a down-lane distance from that trunk 876 to the determined lane entry point 871. Module 465 may compare the computed canopy extent in the current lane with the computed down-lane distance in the next lane to ensure the comparison meets predetermined conditions. That is, the module 465 may compute the difference between these two distances and shift the lane entry point 871 in the down-lane direction. For example, if the computed down-lane distance in the next lane is less than the computed canopy extent in the current lane, the module 465 may adjust or correct the lane entry point 871 in the down-lane direction for the next lane by an amount that is equal to at least a difference between the computed canopy extent of the current lane and the computed down-lane distance in the next lane to ensure that the lane entry point 871 is spaced away in the down-lane direction by a distance that is at least equal to the computed canopy extent.

As another example, if the distance from the lane entry to the nearest trunk exceeds the canopy extent, module 465 may either keep the current entry point 871 unchanged or move the entry point 871 back closer to next lane. FIG. 8D depicts a lane-width correction that module 465 may apply to the entry point 871. The digital map 426 may provide an expected lane width between tree lines 851b and 851c, and the vehicle may compute a measured lane width near the lane entry point 871 by calculating a lateral distance between estimated tree lines corresponding to tree lines 851b and 851c based on latest trunk detections. In FIG. 8D a vertical line 877 denotes the expected tree line on one side of the next lane.

The point 871 marks the lane entry point before the lane-width correction. If the measured lane width differs from the expected lane width, module 465 may shift the lane entry point 871 laterally by the difference. For example, if the measured lane is narrower, module 465 may move the entry point closer to the tree line; if the lane is wider, it may move the entry point farther away. Point 879 represents the entry point after applying the lateral shift. The lane-width correction and the canopy-extent correction ensure that the lane transition places the vehicle at the correct position relative to the first trunks of the next lane, compensating for variability in canopy length and lane width.

The autonomous navigation module 445 may use the lane-end and lane-entry outputs of the exit/entry pipeline to guide the work vehicle through the headland maneuver. For example, referring to FIG. 8B, while the vehicle 863 is travelling in the current lane between tree lines 851a and 851b, the module 445 may receive the primary lane exit point 861 (or the left- and right-row end locations) from the lane-exit determination module 460. Module 445 may monitor the vehicle's position and speed relative to the lane center and compare the longitudinal distance to the exit point 861. As the vehicle approaches the lane exit, module 445 may initiate a deceleration and steering transition: it may reduce the forward speed so that the vehicle can negotiate the headland turn within its kinematic limits, and it may adjust the steering angle to begin departing from the lane center when the vehicle reaches a predetermined distance before the exit point. During this phase the module 445 may continue to track the lateral offset and heading error relative to the lane center and ensure that the vehicle remains centered until the exit maneuver begins.

After the lane-entry determination module 465 has computed a lane entry point 871 for the next lane and applied the canopy-extent and lane-width corrections (as shown in FIGS. 8C-8D), the autonomous navigation module 445 may plan a continuous path from the primary lane exit point 861 to the corrected lane-entry point 871 (879). It may provide these start and end conditions to the path planning module 475, which may generate a set of candidate trajectories that satisfy the vehicle's kinematic constraints and clear the detected obstacles. The selected trajectory may include an arc or sequence of curvature segments that brings the rear axle of the tractor and the implement smoothly from the lane exit to the lane entry. Module 445 may then execute a path-following controller that computes steering commands and speed commands along the trajectory: it may determine the cross-track error and heading error between the vehicle's pose and the planned path, apply a control law (for example, proportional integral derivative gains tuned for the vehicle and implement combination) and output steering-wheel angles and throttle settings. These commands may be transmitted over the vehicle network to the steering actuators and powertrain controllers of the vehicle control system 20. As the vehicle progresses through the headland, module 445 may continuously update the control commands based on feedback from odometry and localization. Once the vehicle reaches the corrected lane entry point 871 and aligns with the center of the next lane (between tree lines 851b and 851c), module 445 may transition back to a lane-following mode using the next lane's center line and resume the process of lane center line detection, exit prediction and entry determination for subsequent lanes.

### EXAMPLE LOCALIZATION

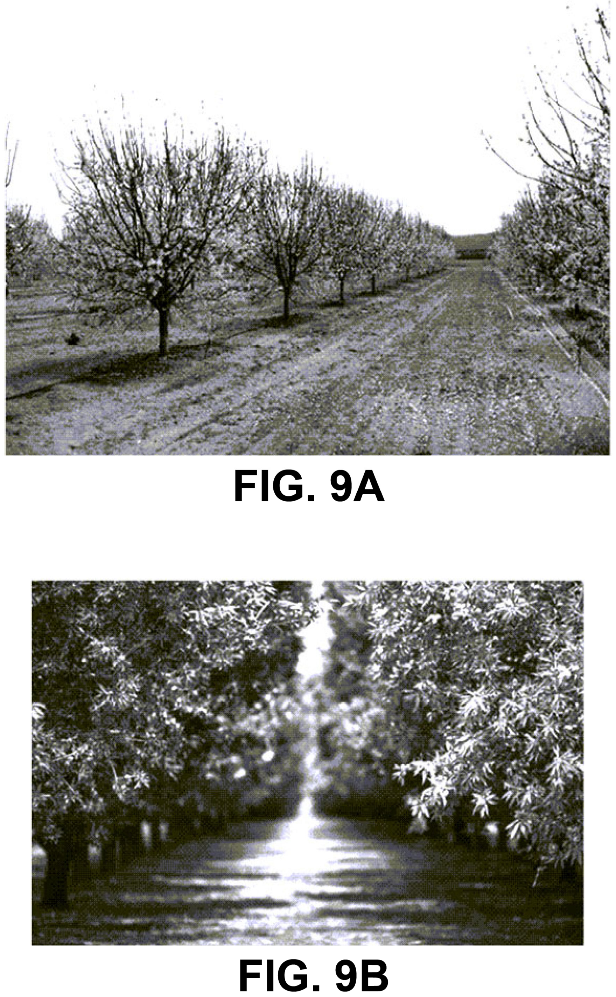

Referring to FIG. 4, functionality of the localization performed by the localization module 470 is explained in detail next in connection with FIGS. 4 and 9A-12B. FIG. 9A shows an orchard lane with a sparse canopy, where sunlight reaches the ground and satellites are in clear view. In such open-canopy conditions a global positioning receiver on the tractor can provide accurate geolocation data that can be used to precisely position the tractor on a global map (e.g., field digital map 426) for autonomous navigation. By contrast, FIG. 9B shows a closed-canopy lane in which branches and leaves form a dense tunnel; under this canopy the GPS signals may be degraded or unavailable. To operate autonomously in either environment, the system 400 includes a localization module 470 that implements a localization pipeline which fuses LiDAR-derived lane geometry with a digital map and, when available, global positioning measurements.

As described previously, the segmentation module 430 may receive range images from a LiDAR sensor mounted on the vehicle. These range images may be processed by the segmentation module 430 using a trained semantic segmentation model to label each pixel as trunk or non-trunk. The module 430 may map the trunk labels back into three-dimensional space to produce trunk point clouds and the centroid generation module 435 may cluster the point clouds to compute centroids for the left and right tree lines. From these centroids, the line estimation module 440 may compute a lane center line relative to the vehicle by taking the midline between the estimated left and right tree lines.

The localization module 470 may receive the lane center line computed in a tractor frame (local coordinate space) from the line estimation module 440. The localization module 470 may also access a digital map of the orchard that specifies lane center lines and tree lines in map coordinates (global coordinate space). Further, the localization module 470 may maintain a current pose estimate, position and orientation, in a state estimator on board the vehicle. The state estimator may propagate this pose estimate forward based on motion data from wheel odometry sensors and then compare the lane center line derived from the LiDAR data with the map lane center line at the current pose. By measuring the lateral offset and heading difference between these lines, the localization module 470 may accurately localize the pose of the vehicle to the mapped lane in the global coordinate space by adjusting the pose estimate based on the lateral offset and heading difference between these lines. This alignment process ("lane center snapping") may be repeated at a fixed update rate to keep the pose estimate accurately localized to the digital map even when GPS signals are unavailable or intermittent.

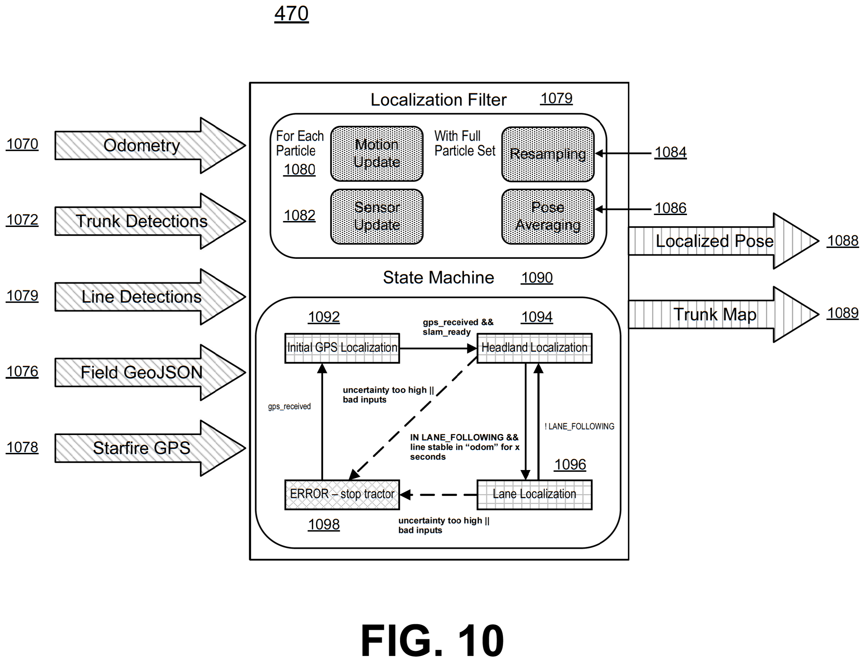

When a GPS signal becomes available, the localization module 470 may also use that signal to correct the pose estimate in the down-lane direction. In some embodiments, the module 470 may compare the down-lane position of the pose estimate with the GPS position and adjust the estimate accordingly. In closed-canopy sections (e.g., FIG. 9B), when the GPS signal is not available, the module 470 may rely solely on the odometry and lane snapping to accurately localize the vehicle pose in the global coordinate space. The adjusted pose from the localization module 470 may be utilized by downstream modules of the control system 400, for example, to generate steering and speed commands that keep the tractor centered between the rows and oriented along the lane center line. Details of functionality and operation of the localization module 470 are described next based on FIGS. 10 and 11A-12B.

FIG. 10 is a block diagram of the localization module 470, in accordance with one or more embodiments. The localization module 470 may receive and process the same data streams that are used to generate the lane center line and tree-line estimates described above. As shown in FIG. 10: (i) odometry data 1070 from the tractor's wheel encoders and steering sensors (e.g., data 416), (ii) clustered trunk detections 1072 produced by applying a semantic segmentation model to the LiDAR range image and clustering the resulting trunk point clouds (e.g., data 418), (iii) lane center and tree-line detections 1074 generated by fitting lines to the trunk centroids (e.g., data 420), (iv) a digital map 1076 containing lane center lines and tree lines (e.g., map 426)), and, when available, (v) Starfire GPS measurements 1078, are all fed into a localization filter 1079.

The localization filter 1079 maintains a set of particles, each particle representing a candidate pose of the tractor in map coordinates with state variables [x, y, yaw]. At each iteration a motion update 1080 propagates every particle's pose forward using the odometry data 1070 so that each candidate reflects the vehicle's most recent displacement and yaw change. In the sensor update 1082 step, the filter 1079 may evaluate each particle against the current sensor inputs: using the trunk detections generated by segmentation module 430 and centroid generation module 435 and the lane center line estimated by the line estimation module 440, it may compare the lane center line derived from the motion update 1080 and the digital map 1076 to the lane center line computed from the sensor data (i.e., output from module 440). From this comparison the filter 1079 may compute an error signal (e.g., a lateral offset and a heading difference for the particle) and assign the particle a weight or score that decreases with increasing error and increases when the particle's pose aligns with the sensor-derived lane center. A resampling block 1084 of the filter 1079 may then replicate the higher-weight particles and discard the lower-weight particles, thereby updating the set of candidate poses. Finally, a pose averaging block 1086 may compute an aggregate of the resampled particle poses to produce a single estimated pose in the map frame, this localized pose 1088 may be used in subsequent downstream operations (e.g., to compute steering and speed commands). A trunk map 1089 in the global coordinate space 1076 may also be output based on the localized pose 1088.

A state machine 1090 may control the operating mode of the module 470: in an initial GPS localization state 1092 the filter may initialize the pose using a first actual GPS measurement; prior to the work vehicle entering the lane, the state estimator therefore sets its current estimated pose equal to this latest high-quality GPS position measurement; in a headland localization state 1094 the filter may fuse GPS measurements with sensor updates when the tractor is turning; in a lane localization state 1096 the module may use the particle filter 1079 for localization; and if a quality metric indicates the pose estimate is unreliable or sensor data are invalid the state machine 1090 may transition to an error state 1098 that halts autonomous navigation.

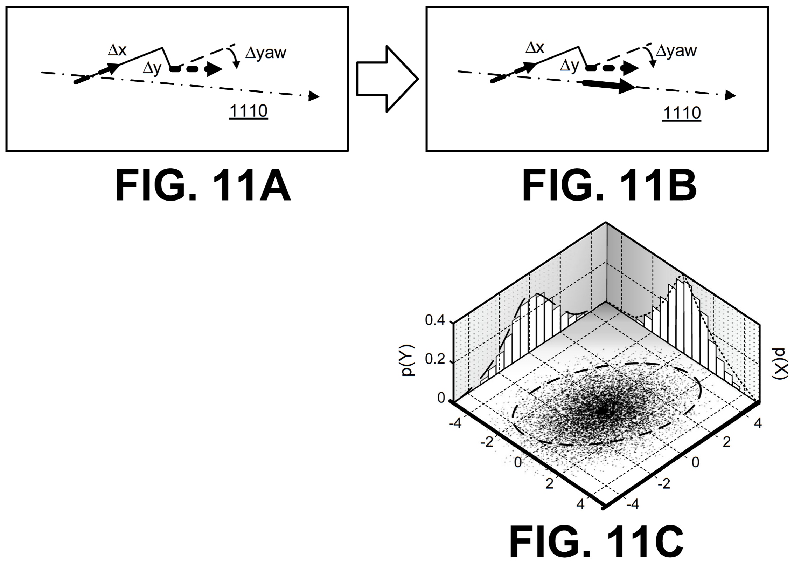

FIGS. 11A-11B illustrate how the particle filter 1079 weights the pose hypotheses based on the lane center alignment and the trunk detections. By performing the lane snapping shown in FIGS. 11A-11B, the localization module 470 measures the lateral offset Δx, the perpendicular offset Δy and the yaw difference Δyaw between the live lane center line computed in the tractor frame from the live LiDAR data and the map lane center line 1110. Particles with larger offsets and yaw differences are weighted less strongly than those whose lane center errors are small. FIG. 11C presents a probability density function for particle weights: the ellipse encloses high-weight particles near the lane center; the histograms along the x and y axes show the likelihood distribution, demonstrating the resampling step 1084. Particles within the ellipse represent particles that may be used for computing the final pose.

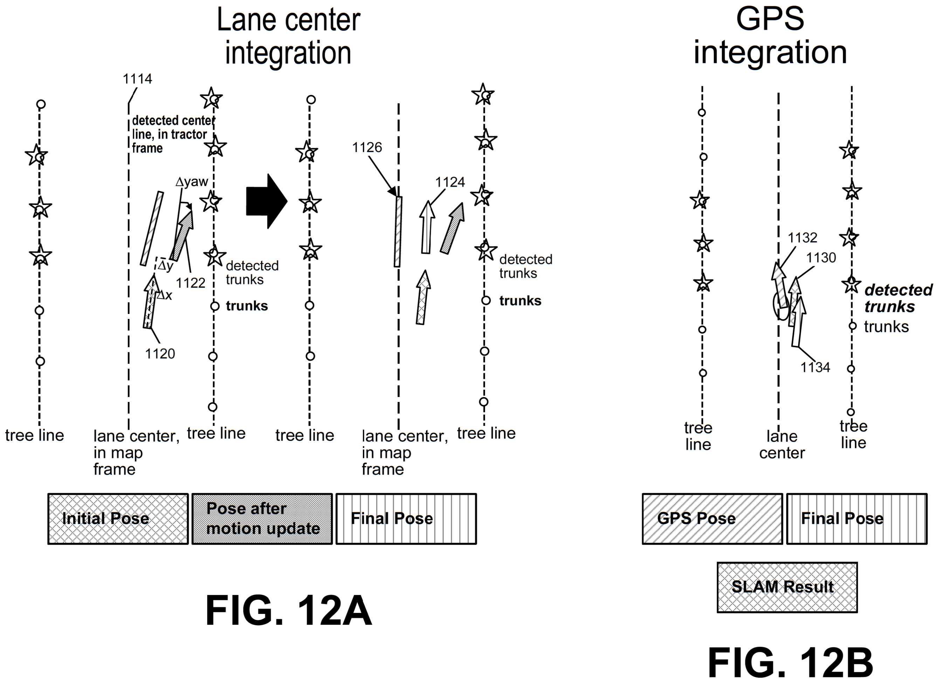

FIG. 12A depicts a lane center integration step of performing "lane snapping" based on the motion update to compute error signals (lateral offset and heading difference) for particles. On the left of FIG. 12A, a detected center line in the tractor frame is drawn alongside the corresponding lane center line 1114 from the map frame and the flanking tree lines. The localization module 470 may calculate the error signal for each particle based on the difference between these two lane center lines. That is, for a given particle, starting from an initial pose 1120 (e.g., true ground truth pose), the odometry may produce a pose 1122 after motion update. And based on the sensor update, the module 470 may detect the center line in tractor frame that corresponds to the odometry-based pose 1122. By snapping the two lane center lines (i.e., in the global or map frame and in the local or tractor frame) module 470 may compute the error signal for the given particle and repeat this process for all particles in the set. By discarding particles with higher error and keeping particles that require less "lane snapping" 1126 (e.g., a particle shown in the right side of FIG. 12A), module 470 may predict the final pose 1124 of the tractor based on the available data (e.g., odometry, LiDAR) even when GPS is unavailable.

FIG. 12B illustrates how GPS measurements may be incorporated into the pose estimate along the down-row direction. Pose 1130 may correspond to a particular particle in a resampled particle set after performing "lane snapping" per FIG. 12A. A GPS receiver mounted on the vehicle may provide a global-positioning pose 1132 ("GPS Pose"). The localization module 470 may compare the down-lane position of the SLAM result 1130 with the GPS position 1132 and compute a distance difference and assign scores/weights based on the difference (e.g., lower difference gets higher weights). Module 470 may retain/resample particles that score higher and discard lower scoring particles. The updated particle set may then be used to determine the final pose 1134 shown in FIG. 12B. This step updates the down-row component of the pose so that it matches the received GPS measurement. In closed canopy environments where GPS is unavailable, the module 470 may omit this correction and relies solely on the SLAM based pose estimation of FIG. 12A. When GPS becomes available again and meets a quality threshold, module 470 may update the pose using the GPS measurement per FIG. 12B. When a new GPS measurement satisfying the quality threshold is received, the state machine 1090 may return to the initial GPS localization state 1092 and reinitialize the current estimated pose using that measurement.

By capturing range images with a LiDAR, labelling the points with a machine-learned segmentation model to identify tree trunks, clustering the labelled points to compute trunk centroids, fitting left and right tree lines and computing a lane center line, maintaining multiple pose hypotheses in a particle filter, comparing the sensor derived lane center line to the map lane center line for each pose hypothesis to compute and sample pose hypotheses with minimum lateral offset and heading difference, incorporating GPS measurements to correct the down-row position, and averaging the surviving hypotheses to produce a single pose, the localization module 470 produces an accurate localized pose in a global coordinate space even when the GPS signal is not available. Based on the identified adjusted or updated pose, downstream modules of the control system 400 may generate steering and speed commands and transmit those commands to the vehicle control system to autonomously navigate the tractor down the lane.

### EXAMPLE PATH PLANNING

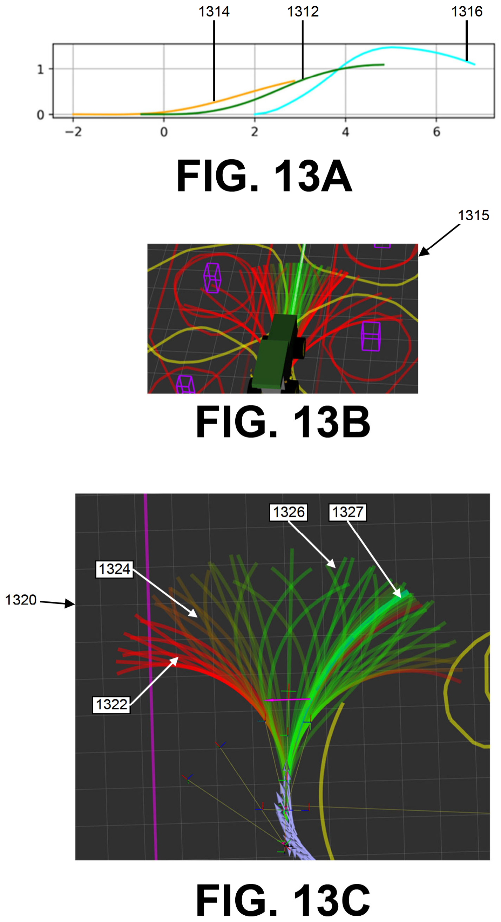

Referring again to FIG. 4, functionality of the path planning module 375 will now be explained with reference to FIGS. 13A-16. After the segmentation and point cloud generation, after the occupancy grid 422 has been populated with impassable obstacles, passable canopy and tree-line obstacles (e.g., tree trunks) by the segmentation module 430, centroid generation module 435 and line estimation module 440, after the localization module 470 has provided an accurate vehicle pose in global map coordinates (i.e., map 426 coordinates), or after the lane exit and lane entry points have been generated by modules 460 and 465, a downstream path planning module 475 may use some or all of this information from upstream modules or subsystems to generate and select a guidance path for the tractor and its implement depending on the current situation. As a reference for alignment and path planning, the module 475 may obtain and utilize the occupancy information produced from the LiDAR range image distinguishes impassable obstacles, passable canopy and tree-line obstacles within a planning horizon; the current steering angle of the work vehicle and the implement articulation angle which define the vehicle's state; or the estimated lane center line and targets (lane center or end-of-row point). With these inputs, the path planning module 375 may operate continuously while the vehicle is navigating the orchard, synthesizing sensor data, map data and odometry data into safe and efficient paths that respect the kinematic limits of the tractor-implement combination.

In some embodiments, the path planning module 475 may generate a short-horizon guidance path for the tractor and any attached implement based on a set of candidate guidance paths and their predicted interactions with the sensed environment. More specifically, the segmentation module 430 may produce occupancy information from each LiDAR frame that distinguishes impassable obstacles (e.g., posts, large equipment, humans), passable canopy (foliage through which the implement can pass), and tree-line obstacles (the tree trunks and a fixed buffer around the trunks). The module 475 may obtain a current state of the work vehicle, including the current steering angle of the tractor and, when the implement is articulated, the implement articulation angle. From this state, the module 475 may generate a set of candidate guidance paths in a local coordinate frame or in a global coordinate frame. Each candidate guidance path may be a continuous-curvature sequence selected from a library of path primitives that includes constant-curvature arcs, S-curve paths, tangent trajectories comprising an arc followed by a straight segment, and shortest-length paths. A sampling density for the candidates may be increased near headlands or areas where tight turns are expected.

A kinematic model of the tractor and implement (stored in the datastore 410) may be used to project each candidate into predicted trajectories for the vehicle's rear axle, front axle and implement axle. FIG. 13A shows an example multi-turn path: a curve 1312 represents the predicted rear-axle path for a candidate guidance path, a curve 1314 shows the corresponding predicted implement axle path and a curve 1316 shows the predicted front-axle path. These predictions allow the module 375 to account for the offset between the tractor and implement and to ensure that both units remain within the lane.

For each candidate guidance path, module 375 may check the predicted trajectories against occupancy information. If any predicted trajectory intersects with an impassable obstacle or encroaches within a predetermined distance of a tree-line obstacle derived from the occupancy grid, the candidate may be discarded. The predetermined distance may be increased in two orthogonal directions based on localization uncertainty from the localization module 470. This way, the same buffer applied when dynamically expanding obstacles to account for localization uncertainty also sets the increased predetermined distance for discarding candidate paths, so that candidate guidance paths with trajectories lying within this larger buffer are rejected to maintain safe clearance whenever localization uncertainty is high. Surviving candidates may then be scored by cost functions that quantify multiple criteria. A canopy-contact cost may increase with the proportion of the predicted trajectory that intersects passable canopy points; the cost may be scaled by canopy density so that contact with dense canopy is penalized more heavily than contact with sparse canopy. In some embodiments, the occupancy information further classifies the passable canopy into density categories such as dense, moderate and light, and the scaling factor applied to the canopy-contact cost increases from light to dense canopy.

A target-alignment cost may measure the alignment of the candidate path with either the center of the current lane or a headland target. A deviation cost may measure the deviation of the candidate path from an optional goal path stored in the digital map 426 (e.g., a pre-recorded path through the orchard). Obstacle-avoidance costs may also be computed for impassable obstacles, passable canopy and tree-line obstacles; each cost may be multiplied by a predetermined weight reflecting the importance of avoiding that obstacle type (e.g., a human detected in guidance path may have a high weight to ensure operational safety). Module 475 may normalize the individual cost components and forms an aggregate cost for each candidate guidance path by combining them with the predetermined weights. FIG. 13B illustrates higher density sampling 1315 of small curvatures while in lane. In this scenario, the planner samples a high density of small-curvature arcs so that the vehicle can follow the lane center precisely. FIG. 13C shows a first sampling stage in which many candidate guidance paths 1320 (shown as colored curves emanating from the tractor) are generated relative to the current steering angle and implement articulation angle. In this lane-following scenario, the curves 1322 (red) correspond to candidates with higher aggregate costs, while the curves 1324 (yellow) and curves 1326 (green) correspond to candidates with decreasing cost.

After computing aggregate costs for all first-stage candidates, the module 475 may select a baseline guidance path, e.g., the lowest-cost candidate among the initial set. A second stage of the planner samples additional guidance paths with continuous curvature sequences that lie within bounds defined by the baseline path and its adjacent candidates (or another similar predetermined range measured based on the baseline). This second sampling stage refines the solution by exploring a narrower band of curvatures around the best coarse path. FIG. 13C shows the first-stage candidate guidance paths (1322, 1324, 1326) together with the refined second-stage paths (shown as tighter curves 1327 clustered around the baseline path 1326). Each refined candidate is evaluated by the kinematic model and the same cost functions, and the candidate with the lowest aggregate cost among the refined set (second stage) is selected as the final guidance path.

Module 475 may then generate steering and speed commands that cause the tractor to follow the selected guidance path. The commands may be computed by a path-following controller that minimizes the lateral error between the vehicle's current position and the selected path and minimizes the heading error between the vehicle's orientation and the tangent direction of the selected path. The controller may also adjust vehicle speed based on the severity of curvature, proximity to obstacles and implement dynamics. These commands may be sent to the vehicle control system 20 for execution. As new LiDAR frames arrive (e.g., at 10 Hz) and the vehicle moves, the path planner repeats the sampling, prediction, evaluation and selection process in real time. In this manner the path planning module 475 continuously produces a sequence of guidance paths that take into account the current state of the vehicle, the kinematic constraints of the tractor-implement combination, the occupancy information derived from the range sensor and digital map, and the need to align with lane centers, headland targets, and the like.

In some embodiments, the path planning module 475 may adaptively subdivide a selected guidance path based on the proximity of an immediate target or detected obstacle. Upon selecting a guidance path as described above, the module 475 may determine a stopping distance along that path equal to the down-lane distance between the vehicle and the nearest target or obstacle in its planning horizon. It may then "clip" the guidance path at that stopping distance and direct the vehicle to navigate the portion of the path within that distance. As the vehicle approaches the clipping point, the module 475 may generate a supplementary set of candidate path segments that begin at the clipping point and extend beyond it. Each supplementary segment may be treated like any other candidate guidance path: the kinematic model may be used to project the tractor's rear axle, front axle and implement axle, the projected trajectories may be checked against the occupancy information, and the same cost functions may be applied to compute an aggregate cost. The module 475 may select, from the supplementary set, the path segment with the lowest aggregate cost and append it to the clipped guidance path so that the vehicle continues along an updated guidance path beyond the stopping distance.

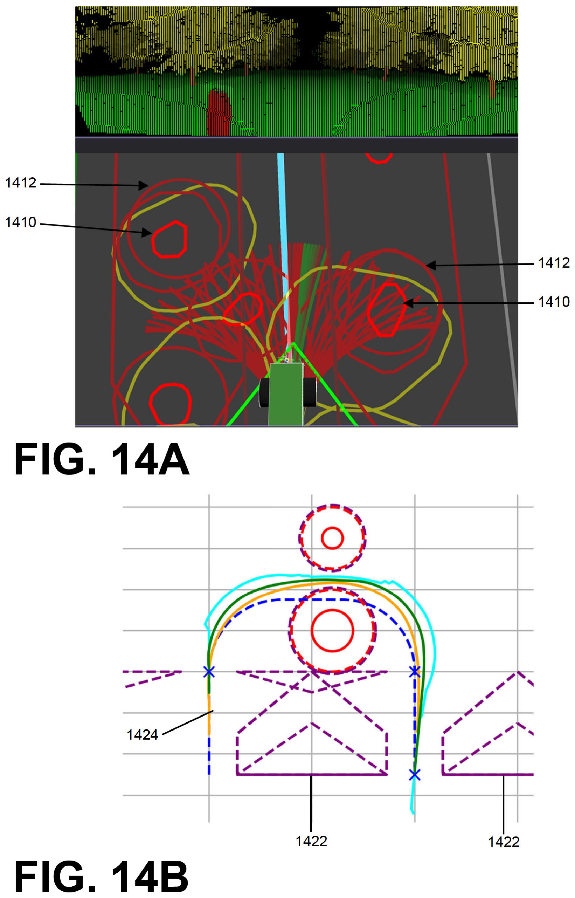

FIG. 14A illustrates how the path planner handles obstacle avoidance in the headland. In FIG. 14A a series of obstacles 1410 and their associated safety buffers 1412 are derived from the occupancy grid 422. Based on the obstacle data, the planner may generate multiple candidate guidance paths and select a particular one of the candidate paths based on obstacle avoidance thresholds being met while minimizing canopy contact (i.e., incurring lowest cost). The ability to generate constant-curvature and S-curve trajectories and to weight canopy contact differently from obstacle avoidance may allow the planner to negotiate tight spaces and still follow the lane center.

FIG. 14B shows a more complex headland maneuver where continuous curvature is disabled and the planner uses forward projection to navigate around multiple obstacles. Tree-line obstacles detected at successive positions are represented by boxes 1422; these boxes are expanded by predetermined buffers. The selected guidance path 1424 may include one or more segments, and the planner may choose this path because it threads between obstacles on both sides and rejoins the lane center (e.g., lane entry point) without collision.

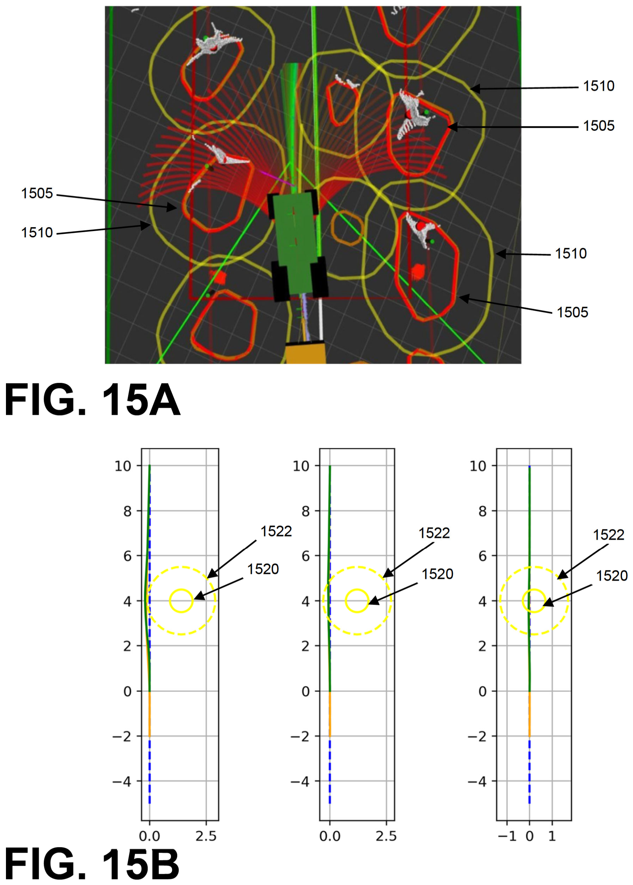

FIGS. 15A-15B illustrate how the planner may handle canopy avoidance. In FIG. 15A, a dense canopy cluster 1505 may be identified from the passable-canopy point cloud and expanded by a buffer 1510. The planner can be configured to fully avoid canopy contact: in this case it may select a guidance path that skirts the edge of the buffer 1510 while remaining close to the lane center.

FIG. 15B shows a scenario where branch 1520 hangs into the lane. The planner may compute a contact threshold 1522 around the branch and evaluate candidate paths. Because the branch partially blocks the lane, the planner cannot avoid it completely; instead, it may select a path that reduces canopy contact to the implement side while accepting minimal contact with tractor. By weighting the canopy-contact cost by canopy density, the planner may penalize contact with dense canopy more strongly than contact with sparse branches and may be capable of partial avoidance when full avoidance is impossible. Out of the three illustrated paths having three different levels of contact illustrated in FIG. 15B, the planner may select a path that optimizes and balances the cost of contact with other factors such as the cost of departing from the lane center or other target or then returning to the lane center or other target after the skirting maneuver.

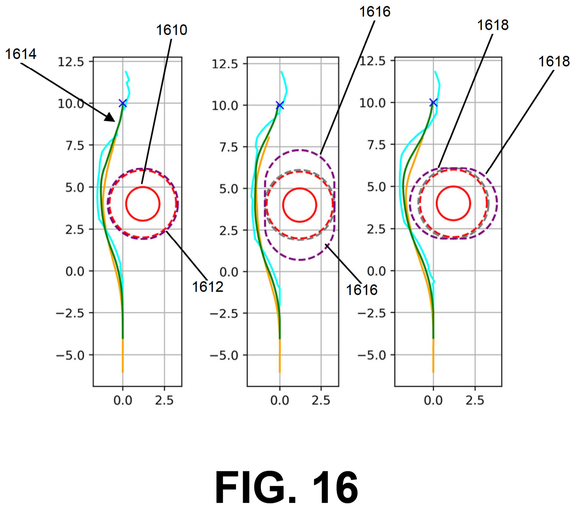

FIG. 16 illustrates dynamic obstacle expansion based on localization uncertainty. In FIG. 16 the original obstacle 1610 is expanded into a larger obstacle 1612 by adding uncertainty margins provided by the localization module 470. The obstacle may be selective expanded or elongated along the X-axis (1618) and/or along the Y-axis (1616) based on whether the particle filter reports lateral uncertainty and/or down-lane uncertainty; this ensures that the planner stays farther away from tree-line obstacles when the pose estimate is less accurate in that direction. Candidate guidance paths 1614 are evaluated against the expanded obstacle 1612, 1616, 1618, rather than the original obstacle 1610 to maintain a robust safety margin. That is, when lateral uncertainty is larger than down-row uncertainty, the buffer grows more in the horizontal direction (1618); when down-row uncertainty is larger, the growth is greater along the lane direction (1616). This dynamic expansion ensures that tree-line obstacles and mapped obstacles are inflated appropriately based on the localization uncertainty values so that the predetermined distance used to reject candidate paths adapts to the current localization quality. Thus, the path planning module 375 integrates sensor-derived occupancy information, vehicle state, predicted trajectories and cost functions to generate guidance paths that avoid obstacles, minimize canopy contact when desired, and adapt obstacle buffers based on localization uncertainty.

### EXAMPLE METHODS

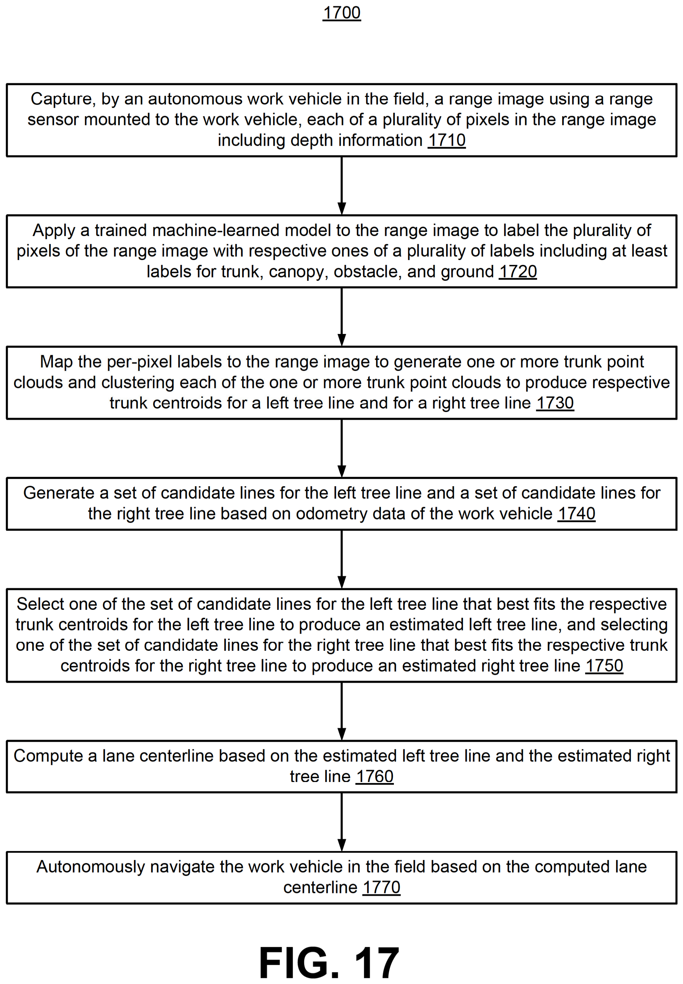

FIG. 17 is a flowchart of an example computer-implemented method 1700 for estimating lane geometry using LiDAR and a neural network. The operations of method 1700 may be carried out automatically by modules of the work-vehicle control system 400. Although shown as discrete steps, the operations can be executed in a different order, in parallel, and/or repeated continuously as the vehicle moves down a row. The method 1700 may execute a neural network for estimating lane geometry and producing a lane centerline. The 1700 method may be implemented by one or more of the modules of FIG. 4 and may run continuously at the sensor update rate (e.g., 10 times a second).

In step 1710, the work vehicle's LiDAR sensor (e.g., in sensor pods 52A-52D of vehicle 10) may capture a range image of the scene ahead and a capture module (e.g., WVPS 50) may project the three-dimensional returns onto a two-dimensional grid, storing the depth and intensity values for each pixel in the datastore 410. The segmentation module 430 may then apply (step 1720), a trained machine-learned model 412 to the range image. Using the per-pixel depth (and optionally, intensity values as input), the model 412 may assign each pixel a semantic label such as trunk, canopy, obstacle or ground. An example output of this network is shown in the upper portion of FIG. 5A where different colors (not shown in FIG. 5A) may indicate different classes or labels. In step 1730, the segmentation module 430 may map these labels back to the original point cloud and isolate the points labelled as trunk to form a trunk point cloud. The centroid generation module 435 may then cluster the trunk point cloud using a proximity threshold, compute a centroid for each cluster by averaging the x-, y- and z-coordinates of the points, and determine whether the centroid lies to the left or right of the vehicle's longitudinal axis. FIG. 5B shows the resulting trunk centroids 520 on the left and right sides of the lane.

In step 1740 the line estimation module 440 may use vehicle odometry data 416 and prior knowledge of row spacing to generate sets of candidate lines for the left and right tree lines. As shown in FIG. 6, the module may maintain independent particle filters and a set of candidate particles for each side; an initial sampling block 601 may draw candidate lines around a prior, and a sample motion model block 602 may propagate each candidate's lateral offset y_norm and heading θ using the vehicle's forward displacement and yaw change. In step 1750 the line estimation module 440 may select a candidate line for each side that best fits the measured trunk centroids. For example, the weigh particles block 603 may calculate the perpendicular distance between each candidate line and each centroid and evaluate a Gaussian likelihood; lines that pass close to many centroids receive higher weights (see particle A versus particle B in FIG. 7A). A resampling block 604 may replicate high-weight particles and discard low-weight particles, and a compute-average block 605 may output, for each side, an estimated left tree line 630 and an estimated right tree line 631, based on the set of lines for each side after the resampling. FIG. 7B shows the resulting estimated tree lines overlaid on the detected centroids. In some implementations the line with the highest weight is taken as the estimated tree line; in others an average of the resampled candidates is computed to obtain an estimated left tree line and an estimated right tree line.

In step 1760 the average block 606 may compute a lane centerline by averaging the estimated left and right tree lines over a predetermined look-ahead distance. The resulting lane centerline 632 (FIG. 7C) may be substantially equidistant from the two measured tree lines and may provide a robust reference for navigation. Finally, in step 1770 the autonomous navigation module 445 may use the computed lane centerline to guide the tractor. For example, it may project the vehicle's current pose onto the lane centerline, compute the lateral and heading errors, and apply a control law to generate steering and speed commands that reduce these errors. The vehicle control system 20 may actuate the steering motors and throttle accordingly so that the tractor follows the lane centerline. As new range images and odometry measurements arrive, steps 1710-1770 may repeat continuously, thereby maintaining an up-to-date lane geometry estimate and enabling autonomous navigation based on the computed lane centerline.

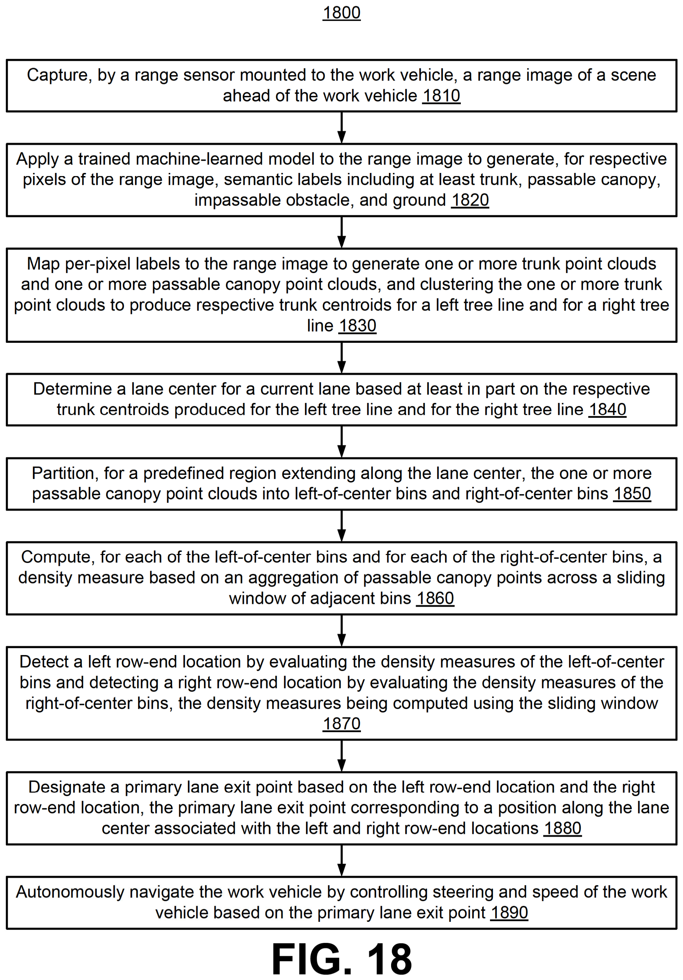

FIG. 18 is a flowchart of an example computer-implemented method 1800 for predicting lane entry and lane exit for an autonomous work vehicle, in accordance with one or more embodiments. The operations of method 1800 may be carried out automatically by modules of the work-vehicle control system 400. Although shown as discrete steps, the operations can be executed in a different order, in parallel, and/or repeated continuously as the vehicle moves from one lane to the headland and from the headland to the next lane (e.g., 10 times a second).

In step 1810, a range sensor such as a LiDAR scanner mounted on the work vehicle 10 and forming part of the work vehicle perception system 50 may capture a range image of the scene ahead of the vehicle. The WVPS controller 72 may format the LiDAR returns into a two-dimensional range image in which each pixel stores a depth value indicating the distance to the reflecting object and, in some implementations, an intensity value. In step 1820, the segmentation module 430 may retrieve a trained semantic segmentation network 412 from the datastore 410 and apply it to the range image. This machine-learned network may process the depth (and optionally intensity) of every pixel and assigns a semantic label, trunk, passable canopy, impassable obstacle or ground, to each pixel, as shown in connection with FIG. 5A. The segmentation module 430 may produce per-pixel labels in real time at the LiDAR frame rate (e.g., 10 Hz).

At step 1830, the per-pixel labels may be mapped back onto the three-dimensional point cloud associated with the range image. The segmentation module 430 may group all points labelled "trunk" into one or more trunk point clouds and group all points labelled "passable canopy" into one or more canopy point clouds. The centroid generation module 435 may operate on the trunk point cloud to cluster trunk points into discrete clusters, each cluster corresponding to an individual tree trunk. For each cluster, the module 435 may compute a centroid by averaging the coordinates of the trunk points, and it may determine whether that centroid lies to the left or right of the vehicle's longitudinal axis. The module may therefore produce separate lists of trunk centroids for the left tree line and for the right tree line, as illustrated in FIG. 5B. Step 1840 may then use these centroids to compute the lane geometry relative to the vehicle. The line estimation module 440 may maintain particle filters (600L, 600R in FIG. 6) to track a set of candidate lines for the left and right tree rows. At each update, it may propagate candidate lines using odometry inputs and scores them against the trunk centroids; the candidate with the highest likelihood on each side may be selected as the estimated left or right tree line. The module 440 may then compute a lane center by averaging the lateral offsets and headings of the estimated left and right lines over a predetermined look-ahead distance, yielding a centerline 632 as shown in FIG. 7C.

Steps 1850-1870 segment the canopy to detect row-end locations. The canopy points binning module 450 may define a rectangular region of interest that extends a specified distance ahead along the lane center and span the lane width. For every passable-canopy point in the current point cloud, the module 450 may determine whether the point lies to the left or right of the lane center and assigns the point to a left-of-center bin or right-of-center bin based on its down-lane coordinate. The bins correspond to fixed intervals along the lane center and accumulate counts of passable-canopy points. The density measurement module 455 may then apply a sliding window over the sequence of bins on each side and compute, for each bin, a smoothed density measure equal to the sum (or other aggregation) of canopy counts across the bins covered by the window. This produces a time series of aggregated canopy densities. Using these density measures, the lane exit determination module 460 may evaluate the left-side and right-side bins to detect row-end locations (step 1870). In some embodiments, the module 460 may identify bins on each side whose smoothed density falls below a learned threshold and group adjacent below-threshold bins into candidate canopy gaps. The module 460 may then evaluate the length of each candidate gap to identify one or more gaps on each side that meet or exceed a learned or preset tree-gap distance and compare candidate gaps on the left and right sides to determine whether a gap on one side overlaps (within a tolerance) a gap on the opposite side. Overlapping gaps may be designated as lane-end regions. For each lane-end region, the module 460 may shift the region backward along the lane by the width of the sliding window to compensate for the window's integration. Among the shifted lane-end regions, the module 460 may select, for each side, the nearest shifted lane-end region as the row-end location for that side..

At step 1880 the module 460 may project the left and right row-end locations onto the lane center and select the farther of the two projections as the primary lane-exit point. FIG. 8B shows an example in which the farther of the left and right row-end projections is designated as the primary lane exit 861. The primary lane-exit point may be on the lane center line. Alternately, it may be off to one side of the lane center line in the lateral direction depending on the turning direction. Finally, in step 1890, the autonomous navigation module 445 may receive this primary lane-exit point and generate steering and speed commands that guide the tractor toward the exit point. The module 445 may monitor the vehicle's position relative to the lane center and the primary exit point, reduce speed as the vehicle approaches the exit, and adjust the steering angle to initiate a headland turn at the appropriate location. By continuously repeating the operations of steps 1810-1890 at, e.g., the LiDAR frame image rate, the work vehicle navigates autonomously within the lane, detects when it is approaching a row end, and executes turns into adjacent lanes based on the computed lane-exit point.

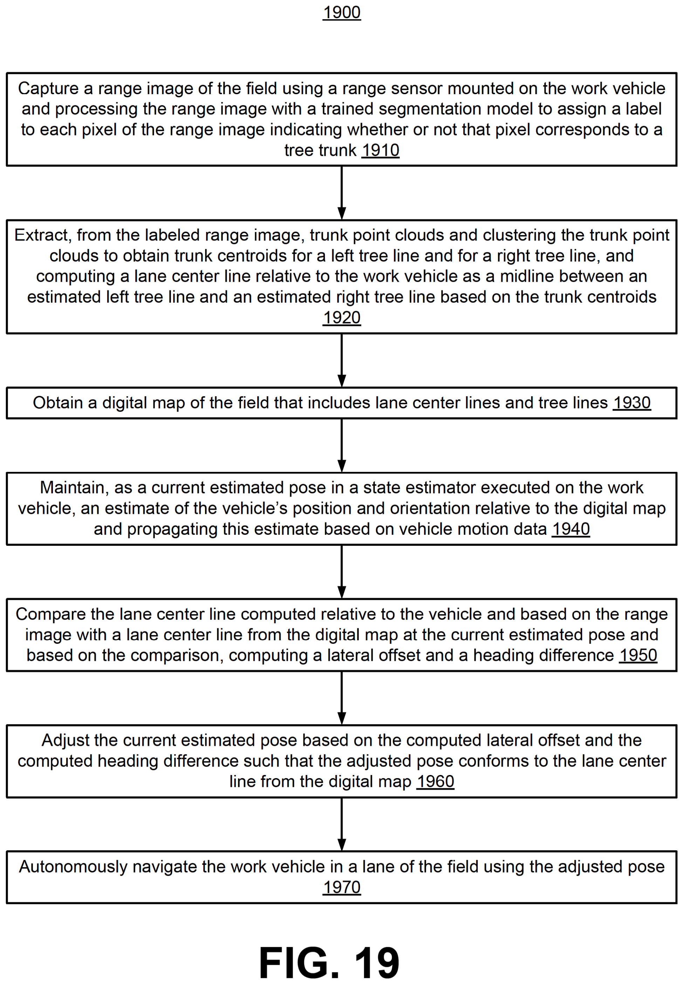

FIG. 19 is a flowchart of an example computer-implemented method 1900 for determining a localized pose of an autonomous work vehicle within a field of tree rows. The steps of method 1900 may be executed automatically by modules of the work-vehicle control system 400, and may run continuously at the sensor's update rate (e.g., ten times per second) while the vehicle moves along a lane. Although illustrated as discrete steps, the operations can be performed in parallel, in a different order, and iterated as new sensor data arrives.

In step 1910, a range sensor such as a LiDAR unit mounted on the tractor (e.g., within the sensor pods 52 of the work vehicle perception system 50) captures a two-dimensional range image of the field ahead of the vehicle. A capture module executed by the WVPS controller 72 may project the LiDAR returns onto a planar grid and stores the resulting depth (and intensity) values for each pixel in the datastore 410. In step 1920, the segmentation module 430 may retrieve the trained semantic segmentation network 412 and applies it to the range image. The network processes the per-pixel depth (and optional intensity) values and assigns each pixel a label indicating whether the return represents a tree trunk or some other class. The segmentation module may then map these labels back to the point cloud and isolate the points labelled as trunks. The centroid generation module 435 may cluster the trunk points into individual trunk clusters and computes a centroid for each cluster by averaging the three-dimensional coordinates of its points. The module 435 may determine whether each centroid lies to the left or the right of the tractor's longitudinal axis, producing separate lists of trunk centroids for the left and right tree lines, as shown in FIG. 5B. Using these centroids, the line estimation module 440 may fit left and right tree lines and compute a lane centerline relative to the vehicle (for example by averaging the lateral offsets and headings of the estimated left and right lines over a look-ahead distance). The resulting lane centerline (e.g., the line 632) may serve as the reference for localization.

Step 1930 obtains a digital map of the field that includes lane center lines and tree lines. The map may be retrieved from the datastore 410 and contains geolocated representations of each lane and tree row. At step 1940, the localization module 470 may maintain a current pose estimate using a state estimator executed on the vehicle. The state estimator may be implemented by the particle-filter-based localization filter 1079 in FIG. 10. It tracks a set of pose hypotheses for the tractor (each hypothesis containing position x and y and heading yaw in the map frame) and propagates these hypotheses forward using vehicle motion data such as wheel-encoder odometry and steering angle measurements.

In step 1950, for each pose hypothesis the localization filter may compare the lane centerline computed relative to the vehicle (from step 1920) with the lane centerline from the digital map at the current hypothesized pose. This comparison may yield a lateral offset (Δx) and a heading difference (Δyaw) between the sensor-derived centerline and the mapped centerline, as described in the lane-snapping operations illustrated in FIG. 11A-11B. Particles whose offsets and heading differences are smaller receive higher weights, while those whose errors are larger are down-weighted. These differences constitute the error signals used for resampling the particles, and ultimately for the localization.

At step 1960, the localization module may adjust the current estimated pose based on the computed lateral offset and heading difference. In a particle-filter implementation, the resampling block 1084 may replicate high-weight hypotheses and discard low-weight hypotheses, and the pose-averaging block 1086 may compute an aggregate of the surviving hypotheses to produce an adjusted pose that conforms more closely to the lane centerline from the digital map. This operation, sometimes called lane-center snapping, may effectively shift the estimate laterally and rotate it in heading so that the estimated pose aligns with the mapped lane geometry and is a more accurate reflection of the true pose of the vehicle on the digital map in the global coordinate space even when GPS is unavailable or unreliable

Finally, in step 1970 the autonomous navigation module 445 may use the adjusted pose to guide the tractor along the lane. The module may project the vehicle's adjusted position and orientation onto the lane center and compute steering and speed commands that minimize the lateral and heading errors. These commands may be sent to the vehicle control system 20, which actuates the steering motors and throttle, allowing the tractor to follow the lane accurately. By continuously executing steps 1900-1960 as new LiDAR frames and odometry updates arrive, the work vehicle may maintain an accurate, map-referenced pose even when GPS is unavailable and navigates autonomously within the tree-row environment.

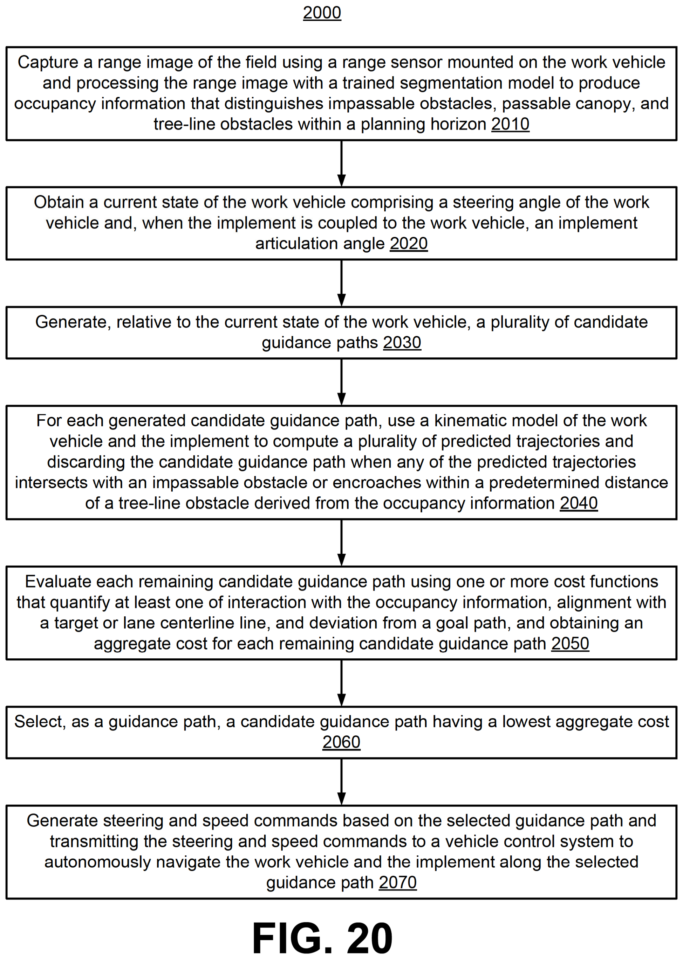

FIG. 20 depicts a computer-implemented method 2000 performed by the path planning module 475 of the work-vehicle control system 400 for generating a guidance path that navigates a tractor-implement combination through a row while avoiding obstacles, limiting canopy contact and aligning with the lane center or a headland target. The method 2000 may be repeated continuously at the LiDAR frame rate as the vehicle traverses the orchard.

In step 2010, the work vehicle's LiDAR sensor (e.g., one of the range sensors housed in sensor pods 52A-52D) may capture a range image of the field ahead. The WVPS controller 72 may format the LiDAR returns into a two-dimensional range image in which each pixel stores a depth value (and optionally intensity). The segmentation module 430 may retrieve a trained semantic segmentation model 412 and applies it to the range image to assign a category to each pixel: trunk, passable canopy, impassable obstacle or ground. The labels are mapped back to the three-dimensional point cloud to produce an occupancy grid 422 in which voxels corresponding to tree-trunk returns become tree-line obstacles, voxels corresponding to non-foliage obstacles become impassable obstacles, and voxels corresponding to non-tree-trunk foliage become passable canopy.

At step 2020 the path planning module 475 may obtain the current state of the vehicle from the vehicle control system 20: this state may include the present steering angle of the tractor and, if an implement is coupled to the tractor, the articulation angle between the tractor and implement measured by the implement articulation sensor 32. These state variables may define the initial conditions for trajectory simulation.

Step 2030 generates a set of candidate guidance paths relative to the current state. The path planning module 475 may sample continuous-curvature sequences from a library of path primitives that include constant-curvature arcs, S-curves and tangent trajectories. The sampling density may depend on location (e.g., higher near headlands). For each candidate, the module 475 may use the current steering and articulation angles to seed the curvature sequence, producing a distinct path in the local coordinate frame. FIG. 13B depicts such sampling, where higher density of small-curvature arcs 1315 is used to follow the lane center precisely.

In step 2040 each candidate guidance path may be checked for safety against the occupancy information. The path planning module 475 may access the kinematic model of the tractor and implement stored in datastore 410. It may propagate the current state along the curvature sequence to compute predicted trajectories for the rear axle of the tractor, the front axle of the tractor, and/or the axle of the implement. These predicted trajectories may be compared against the occupancy grid 422. A candidate guidance path may be discarded if any predicted trajectory intersects an impassable obstacle or passes within a predetermined distance of a tree-line obstacle. The predetermined distance may be expanded along the lateral and down-lane axes based on localization uncertainty values reported by the localization module 470, as shown in FIG. 16 where the original obstacle 1610 is expanded into a larger obstacle 1612 with separate expansions 1618 and 1616 for lateral and down-lane uncertainties.

In step 2050 the module 475 may evaluate each surviving candidate guidance path using cost functions that quantify multiple aspects of path quality. A canopy-contact cost may increase with the fraction of the predicted trajectory that intersects passable-canopy voxels; this cost may be scaled by canopy density so that contact with dense canopy is penalized more than contact with moderate or light canopy (FIGS. 15A-15B). A target-alignment cost measures how well the candidate aligns with a lane-center target or an end-of-row target, for example by computing the lateral deviation from the lane centerline or the distance to a headland target. A deviation cost may quantify how far the candidate diverges from a goal path stored in the digital map 426. Additional obstacle-avoidance costs may be computed separately for impassable obstacles, passable canopy and tree-line obstacles; each cost scaled by a predetermined weight reflecting the severity of hitting that obstacle type. The module 475 may normalize and combine these cost components using predetermined weights to obtain an aggregate cost for each candidate guidance path. For example, in FIG. 13C curves 1322 correspond to higher costs, curves 1324 to intermediate costs, and curves 1326 to lower costs.

At step 2060 the path planning module 475 may select the candidate guidance path having the lowest aggregate cost as the guidance path. In some implementations this path is further refined by a second stage of sampling within bounds defined by neighboring candidates, resulting in the final path (shown by curves 1327 in FIG. 13C). The selected path may be represented as a continuous sequence of curvatures and define the desired trajectory for the tractor's rear axle, front axle and implement axle.

Finally, in step 2070, the module 475 may generate steering and speed commands that cause the tractor and implement to follow the selected guidance path. A path-following controller may compute cross-track and heading errors between the vehicle's current pose (as estimated by the localization module 470) and the selected trajectory, then apply proportional-integral-derivative gains to generate steering-wheel angles and throttle settings. These commands may be transmitted to the vehicle control system 20, which may actuate the tractor's steering and propulsion systems. As illustrated in FIGS. 14A-15B, the controller may slow down as the vehicle approaches a tree-line obstacle, steer around dense canopy clusters, or thread between obstacles and re-align with the lane center. The entire process of capturing LiDAR data, generating and evaluating candidate guidance paths, selecting a path and issuing commands may repeat continuously so that the vehicle can autonomously navigate down the lane and through the headland under changing environmental conditions.

### EXAMPLE COMPUTER SYSTEM

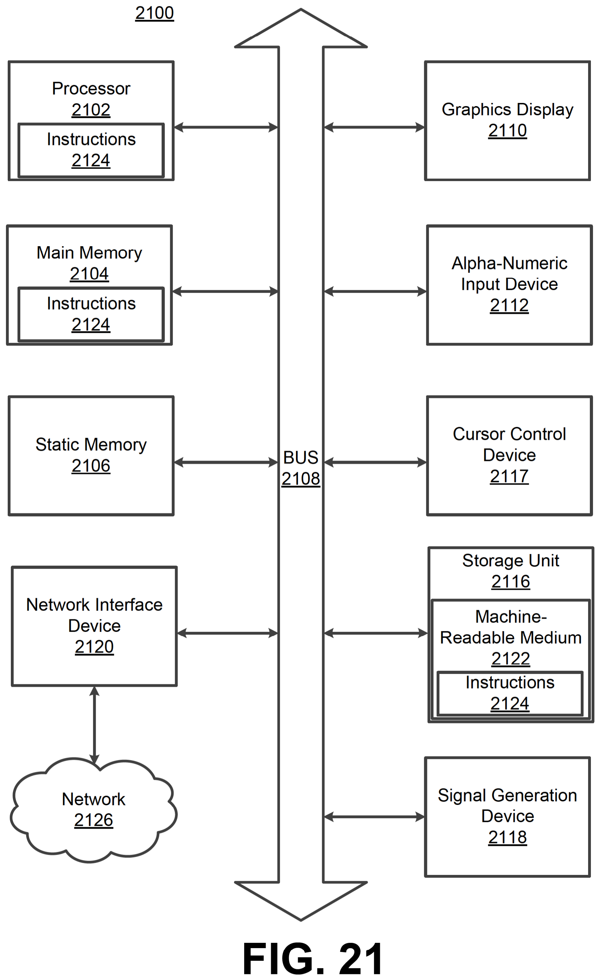

FIG. 21 is a block diagram illustrating components of an example machine for reading and executing instructions from a non-transitory machine-readable medium, in accordance with one or more embodiments. Specifically, FIG. 21 shows a diagrammatic representation of one or more of the control system 230, WVPS controller 72, vehicle control system 20, work vehicle control system 400, line estimator 600, localization module 470 (FIG. 10), or the machines for performing the processes 1700-2000 of FIGS. 17-20, in the example form of a computer system 2100.

The computer system 2100 can be used to execute instructions 2124 (e.g., program code or software) for causing the machine to perform any one or more of the methodologies (or processes) or modules described herein. In alternative embodiments, the machine operates as a standalone device or a connected (e.g., networked) device that connects to other machines. In a networked deployment, the machine may operate in the capacity of a server machine or a client machine in a client-server network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 2124 (sequential or otherwise) that specify actions to be taken by that machine. Further, while only a single machine is illustrated, the term "machine" shall also be taken to include any collection of machines that individually or jointly execute instructions 2124 to perform any one or more of the methodologies discussed herein.

The example computer system 2100 includes one or more processing units (generally processor 2102). The processor 2102 may include, for example, a central processing unit (CPU), a graphics processing unit (GPU), a digital signal processor (DSP), a control system, a state machine, one or more application-specific integrated circuits (ASICs), one or more radiofrequency integrated circuits (RFICs), or any combination of these. The computer system 2100 also includes a main memory 2104. The computer system 2100 may further include a storage unit 2116. The processor 2102, memory 2104, and the storage unit 2116 communicate via a bus 2108.

In addition, the computer system 2100 may include a static memory 2106, a graphics display 2110 (e.g., to drive a plasma display panel (PDP), a liquid crystal display (LCD), or a projector). The computer system 2100 may also include an alphanumeric input device 2112 (e.g., a keyboard), a cursor control device 2117 (e.g., a mouse, a trackball, a joystick, a motion sensor, or other pointing instrument), a signal generation device 2118 (e.g., a speaker), and a network interface device 2120, which also are configured to communicate via the bus 2108.

The storage unit 2116 includes a machine-readable medium 2122 on which is stored instructions 2124 (e.g., software) embodying any one or more of the methodologies or functions described herein. For example, the instructions 2124 may include the functionalities of modules of one or more of the control system 230, WVPS controller 72, vehicle control system 20, work vehicle control system 400, line estimator 600, localization module 470 (FIG. 10), or the machines for performing the processes 1700-2000 of FIGS. 17-20. The instructions 2124 may also reside, completely or at least partially, within the main memory 2104 or within the processor 2102 (e.g., within a processor's cache memory) during execution thereof by the computer system 2100. The main memory 2104 and the processor 2102 also constitute machine-readable media. The instructions 2124 may be transmitted or received over a network 2126 via the network interface device 2120.

### ADDITIONAL CONFIGURATION CONSIDERATIONS

The foregoing description of the embodiments has been presented for the purpose of illustration; it is not intended to be exhaustive or to limit the patent rights to the precise forms disclosed. Persons skilled in the relevant art can appreciate that many modifications and variations are possible in light of the above disclosure. Some portions of this description describe the embodiments in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like.

Furthermore, it has also proven convenient at times, to refer to these arrangements of operations as modules, without loss of generality. The described operations and their associated modules may be embodied in software, firmware, hardware, or any combinations thereof. Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments may also relate to a product that is produced by a computing process described herein. Such a product may comprise information resulting from a computing process, where the information is stored on a non transitory, tangible computer readable storage medium and may include any embodiment of a computer program product or other data combination described herein. Finally, the language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the embodiments is intended to be illustrative, but not limiting, of the scope of the patent rights, which is set forth in the following claims.

## Claims

1. A computer-implemented method for an autonomous work vehicle operating in a field, the method comprising:
capturing, by a range sensor (50) mounted to the work vehicle (10), a range image of a scene ahead of the work vehicle;
applying a trained machine-learned model (412) to the range image to generate, for respective pixels of the range image, semantic labels including at least trunk, passable canopy, impassable obstacle, and ground;
mapping per-pixel labels to the range image to generate one or more trunk point clouds and one or more passable canopy point clouds, and clustering (435) the one or more trunk point clouds to produce respective trunk centroids for a left tree line and for a right tree line;
determining (440) a lane center for a current lane based at least in part on the respective trunk centroids produced for the left tree line and for the right tree line;
partitioning (450), for a predefined region extending along the lane center, the one or more passable canopy point clouds into left-of-center bins and right-of-center bins;
computing (455), for each of the left-of-center bins and for each of the right-of-center bins, a density measure based on an aggregation of passable canopy points across a sliding window of adjacent bins;
detecting (460) a left row-end location by evaluating the density measures of the left-of-center bins and detecting a right row-end location by evaluating the density measures of the right-of-center bins, the density measures being computed using the sliding window;
designating (460) a primary lane exit point based on the left row-end location and the right row-end location, the primary lane exit point corresponding to a position along the lane center associated with the left and right row-end locations; and
autonomously navigating (445) the work vehicle by controlling steering and speed of the work vehicle based on the primary lane exit point.

2. The computer-implemented method of claim 1, further comprising:
generating a lane entry point for a next lane based on a mapped lane-end relationship between the current lane and the next lane, as well as based on the designated primary lane exit point and a relative difference between the designated primary lane exit point and a mapped lane exit point for the current lane.

3. The computer-implemented method of claim 1 or 2, further comprising correcting the lane entry point using a canopy-extent correction which comprises:
determining, for the current lane, a canopy extent equal to a distance in a down-lane direction between a last detected trunk and the designated primary lane exit point;
determining a down-lane distance between a trunk nearest an expected tree line of the next lane and the lane entry point; and
shifting the lane entry point in the down-lane direction based on a difference between the down-lane distance and the canopy extent.

4. The computer-implemented method of claim 1, 2 or 3, further comprising autonomously navigating the work vehicle based on the corrected lane entry point by:
planning a trajectory from the primary lane exit point to the corrected lane entry point;
computing steering and speed commands that guide the work vehicle along the planned trajectory;
transmitting the steering and speed commands to a vehicle control system; and
executing a lane-transition maneuver to enter a next lane using the corrected lane entry point.

5. The computer-implemented method of claim 2, further comprising correcting the lane entry point using a lane-width correction which comprises:
determining an expected lane width from a map;
determining a measured lane width proximate the lane entry point from detected trunk locations or estimated tree lines; and
shifting the lane entry point laterally by a difference between the expected lane width and the measured lane width.

6. The computer-implemented method of any of the preceding claims, wherein detecting the left row-end location and the right row-end location comprises:
identifying, on each side, bins whose smoothed density measures fall below a learned threshold, grouping adjacent below-threshold bins into tree gaps, and recognizing as candidate gaps, one or more of the tree gaps that meet or exceed a learned or preset tree-gap distance;
designating a candidate gap as a lane-end region when it overlaps a candidate gap on an opposite side;
shifting each lane-end region backward toward the work vehicle by a distance equal to a width of the sliding window; and
selecting, for each side, a nearest shifted lane-end region on that side as a row-end location.

7. The computer-implemented method of any of the preceding claims, wherein designating the primary lane exit point comprises:
projecting the left row-end location and the right row-end location to the lane center and selecting, as the primary lane exit point, a position along the lane center corresponding to whichever of the row-end locations lies farther along the lane from the work vehicle.

8. The computer-implemented method of any of the preceding claims, wherein the range sensor comprises a LiDAR configured to generate the range image.

9. A non-transitory computer-readable storage medium storing instructions that, when executed by one or more processors, cause an autonomous work vehicle to perform operations comprising:
capturing, by a range sensor (50) mounted to the work vehicle (10), a range image of a scene ahead of the work vehicle;
applying a trained machine-learned model (412) to the range image to generate, for respective pixels of the range image, semantic labels including at least trunk, passable canopy, impassable obstacle, and ground;
mapping per-pixel labels to the range image to generate one or more trunk point clouds and one or more passable canopy point clouds, and clustering (435) the one or more trunk point clouds to produce respective trunk centroids for a left tree line and for a right tree line;
determining (440) a lane center for a current lane based at least in part on the respective trunk centroids produced for the left tree line and for the right tree line;
partitioning (450), for a predefined region extending along the lane center, the one or more passable canopy point clouds into left-of-center bins and right-of-center bins;
computing (455), for each of the left-of-center bins and for each of the right-of-center bins, a density measure based on an aggregation of passable canopy points across a sliding window of adjacent bins;
detecting (460) a left row-end location by evaluating the density measures of the left-of-center bins and detecting a right row-end location by evaluating the density measures of the right-of-center bins, the density measures being computed using the sliding window;
designating (460) a primary lane exit point based on the left row-end location and the right row-end location, the primary lane exit point corresponding to a position along the lane center associated with the left and right row-end locations; and
autonomously navigating (445) the work vehicle by controlling steering and speed of the work vehicle based on the primary lane exit point.

10. The non-transitory computer-readable storage medium of claim 9, wherein the instructions further cause the autonomous work vehicle to perform an operation comprising:
generating a lane entry point for a next lane based on a mapped lane-end relationship between the current lane and the next lane, as well as based on the designated primary lane exit point and a relative difference between the designated primary lane exit point and a mapped lane exit point for the current lane.

11. The non-transitory computer-readable storage medium of claim 9 or 10, further comprising correcting the lane entry point using a canopy-extent correction which comprises:
determining, for the current lane, a canopy extent equal to a distance in a down-lane direction between a last detected trunk and the designated primary lane exit point;
determining a down-lane distance between a trunk nearest an expected tree line of the next lane and the lane entry point; and
shifting the lane entry point in the down-lane direction based on a difference between the down-lane distance and the canopy extent.

12. The non-transitory computer-readable storage medium of claim 11, further comprising autonomously navigating the work vehicle based on the corrected lane entry point by:
planning a trajectory from the primary lane exit point to the corrected lane entry point;
computing steering and speed commands that guide the work vehicle along the planned trajectory;
transmitting the steering and speed commands to a vehicle control system; and
executing a lane-transition maneuver to enter a next lane using the corrected lane entry point.

13. The non-transitory computer-readable storage medium of claim 9 or 10, further comprising correcting the lane entry point using a lane-width correction which comprises:
determining an expected lane width from a map;
determining a measured lane width proximate the lane entry point from detected trunk locations or estimated tree lines; and
shifting the lane entry point laterally by a difference between the expected lane width and the measured lane width.

14. The non-transitory computer-readable storage medium of any of the preceding claims, wherein detecting the left row-end location and the right row-end location comprises:
identifying, on each side, bins whose smoothed density measures fall below a learned threshold, grouping adjacent below-threshold bins into tree gaps, and recognizing as candidate gaps, one or more of the tree gaps that meet or exceed a learned or preset tree-gap distance;
designating a candidate gap as a lane-end region when it overlaps a candidate gap on an opposite side;
shifting each lane-end region backward toward the work vehicle by a distance equal to a width of the sliding window; and
selecting, for each side, a nearest shifted lane-end region on that side as a row-end location.

15. An autonomous work vehicle (10), comprising:
at least one memory; and
at least one processor coupled with the at least one memory, the at least one memory storing code comprising instructions that, when executed by the at least one processor, cause the autonomous work vehicle to perform operations comprising:
capturing, by a range sensor (50) mounted to the work vehicle (10), a range image of a scene ahead of the work vehicle;
applying a trained machine-learned model (412) to the range image to generate, for respective pixels of the range image, semantic labels including at least trunk, passable canopy, impassable obstacle, and ground;
mapping per-pixel labels to the range image to generate one or more trunk point clouds and one or more passable canopy point clouds, and clustering (435) the one or more trunk point clouds to produce respective trunk centroids for a left tree line and for a right tree line;
determining (440) a lane center for a current lane based at least in part on the respective trunk centroids produced for the left tree line and for the right tree line;
partitioning (450), for a predefined region extending along the lane center, the one or more passable canopy point clouds into left-of-center bins and right-of-center bins;
computing (455), for each of the left-of-center bins and for each of the right-of-center bins, a density measure based on an aggregation of passable canopy points across a sliding window of adjacent bins;
detecting (460) a left row-end location by evaluating the density measures of the left-of-center bins and detecting a right row-end location by evaluating the density measures of the right-of-center bins, the density measures being computed using the sliding window;
designating (460) a primary lane exit point based on the left row-end location and the right row-end location, the primary lane exit point corresponding to a position along the lane center associated with the left and right row-end locations; and
autonomously navigating (445) the work vehicle by controlling steering and speed of the work vehicle based on the primary lane exit point.
